# EUROPEAN PATENT APPLICATION

(11) **EP 4 210 377 A1**
(43) Date of publication of application: **12.07.2023**
(21) Application number: 20955595.2
(22) Date of filing: 29.09.2020
(51) Int. Cl.: H04W 24/08, H04W 24/10

(54) **METHOD AND DEVICE FOR INTERFERENCE TRACKING**

(71) Applicant: Huawei Technologies Co., Ltd., Shenzhen, Guangdong 518129 (CN)
(72) Inventor: LI, Ruijie, Shenzhen, Guangdong 518129 (CN); GUAN, Lei, Shenzhen, Guangdong 518129 (CN); LI, Shengyu, Shenzhen, Guangdong 518129 (CN)
(74) Representative: Gill Jennings & Every LLP
(86) International application number: PCT/CN2020/119035
(87) International publication number: WO 2022/067570

(57) **Abstract**

This application provides an interference tracking method and an apparatus. A first terminal receives second information from a second network device on a first time-frequency resource, measures interference from the second network device based on the second information, and feeds back first interference information obtained through measurement to a first network device. Because the second information is sent by the second network device (that is, an interference source), the method enables the first terminal to measure interference in a timely manner based on an interference change of the interference source, accurately track an interference change caused by the second network device, and report more accurate interference information to the first network device, so that the first network device can perform more accurate data scheduling, to effectively improve data transmission reliability.

## Description

### TECHNICAL FIELD

This application relates to the field of wireless communication technologies, and in particular, to an interference tracking method and an apparatus.

### BACKGROUND

Compared with previous generations of mobile communication systems, a 5th generation (the 5th generation, 5G) mobile communication system imposes higher requirements on a transmission rate, latency, power consumption, and the like, and is dedicated to implementing higher system performance and supporting a plurality of service types, different deployment scenarios, and a wider spectrum range. Enhanced mobile broadband (enhanced mobile broadband, eMBB), massive machine-type communications (massive machine-type communications, mMTC), and ultra-reliable and low-latency communications (ultra-reliable and low-latency communications, URLLC) are three typical application scenarios of the 5G communication system.

The URLLC can be applied to applications such as industrial control, industrial production process automation, human-machine interaction, and telemedicine. Core indicators for supporting these applications are reliability and latency. Therefore, compared with another application scenario, the URLLC imposes higher requirements on the reliability and the latency. For example, in industrial control, a typical requirement is to transmit a 32-byte data packet within latency of 1 millisecond, and reliability reaches 99.999%.

Due to high-reliability and low-latency requirements of the URLLC, data transmission in a URLLC application scenario has a few retransmission opportunities or even no retransmission opportunity, and an effect of improving reliability by using a hybrid automatic repeat request (hybrid automatic repeat request, HARQ) technology is poor. Therefore, for a URLLC service, each data transmission needs to be robust. For example, a lower bit rate and a lower modulation order are used to reduce a transmission error probability. Further, due to a high-reliability requirement of the URLLC, a random event (for example, inter-cell interference) usually has severe impact on communication performance.

To overcome impact of the random event on data transmission, one method in a conventional technology is to use a more robust transmission manner, but this causes low data transmission efficiency of the URLLC service. Another method is to configure dense measurement resources to measure inter-cell interference. Because many time-frequency resources are used for channel/interference measurement, overheads of the measurement resources are high.

### SUMMARY

This application provides an interference tracking method and an apparatus, to accurately track a change of inter-cell interference, and improve data transmission efficiency while ensuring transmission reliability.

According to a first aspect, this application provides an interference tracking method. The method may be performed by a first terminal, or may be performed by a component (for example, a chip or a circuit) disposed in the first terminal.

The method may include: A first terminal receives first information from a first network device, where the first information indicates a first time-frequency resource. The first terminal receives second information from a second network device on the first time-frequency resource. The first terminal reports first interference information obtained through measurement based on the second information to the first network device.

In the foregoing technical solution, the first terminal may receive the second information from the second network device on the first time-frequency resource, measure interference from the second network device based on the second information, and report the first interference information obtained through measurement to the first network device. Because the second information is sent by the second network device (that is, an interference source), the method enables the first terminal to accurately measure interference in a timely manner based on an interference change of the interference source, better track an interference change caused by the second network device, and report more accurate interference information to the first network device, so that the first network device can also perform more accurate data scheduling, to effectively improve data transmission reliability.

In a possible design of the first aspect, the second information indicates a second time-frequency resource for interference measurement, and the first interference information is obtained through measurement on the second time-frequency resource.

In a possible design of the first aspect, the second information includes an index of the second time-frequency resource; the second information includes an index of a first reporting configuration, and the first reporting configuration is associated with the second time-frequency resource; or the second information includes an index of a first measurement resource set, and the first measurement resource set includes the second time-frequency resource. Alternatively, the second information indicates an index of the second time-frequency resource, the second information indicates an index of a first reporting configuration, or the second information indicates an index of a first measurement resource set.

In a possible design of the first aspect, the second time-frequency resource is an interference measurement resource corresponding to a first interference pattern of the second network device; and that the first terminal reports first interference information obtained through measurement to the first network device further includes: The first terminal reports one or more of the following information: an identifier of the first interference pattern, the index of the second time-frequency resource, the index of the first reporting configuration, and the index of the first measurement resource set, where the first reporting configuration is a reporting configuration corresponding to the first interference pattern, and the first measurement resource set includes the second time-frequency resource.

In the foregoing technical solution, when reporting the first interference information, the first terminal may further report identification information of the first interference pattern corresponding to the first interference information, so that the first network device can identify, based on the identification information of the first interference pattern, that the first terminal measures interference in the first interference pattern of the second network device.

In a possible design of the first aspect, the second information further indicates a first time range; and the method further includes: The first terminal skips detecting, in the first time range, indication information that is from the second network device and that indicates to measure interference.

In the foregoing technical solution, interference caused by the second network device may remain unchanged in the first time range. Therefore, the second network device indicates, by indicating the first time range, that the first terminal does not need to detect the indication information indicating to measure interference, or does not need to measure interference, so that resources (including computing resources and energy) of the first terminal can be effectively saved.

In a possible design of the first aspect, the second information further indicates a third time-frequency resource, and the third time-frequency resource is an interference measurement resource corresponding to a second interference pattern of the second network device; and that the first terminal reports first interference information obtained through measurement to the first network device further includes: The first terminal reports second interference information obtained through measurement on the third time-frequency resource to the first network device.

In the foregoing technical solution, if the interference caused by the second network device is uncertain (for example, there may be a plurality of interference patterns or a combination of a plurality of interference patterns), or the second network device has a plurality of interference patterns, the second network device may indicate, in the second information, interference measurement resources corresponding to the plurality of interference patterns. In this way, the first terminal may separately measure and report interference in the plurality of interference patterns, so that the first network device can accurately determine interference caused by the second network device to the first terminal.

In a possible design of the first aspect, the first interference information is included in a first measurement report and sent to the first network device. The first measurement report further includes first indication information, and the first indication information indicates the second network device; or the first measurement report is sent at a first moment, and the first moment is an interference reporting moment associated with the second network device.

According to a second aspect, this application provides an interference tracking method. The method may be performed by a second network device, or may be performed by a component (for example, a chip or a circuit) disposed in the second network device.

The method may include: A second network device receives third information from a first network device, where the third information indicates a first time-frequency resource. The second network device sends second information to a first terminal on the first time-frequency resource, where the second information is used by the first terminal to measure interference.

In a possible design of the second aspect, the second information indicates a second time-frequency resource, and the second time-frequency resource is an interference measurement resource corresponding to a first interference pattern of the second network device.

In a possible design of the second aspect, the second information includes an index of the second time-frequency resource; the second information includes an index of a first reporting configuration, and the first reporting configuration is associated with the second time-frequency resource; or the second information includes an index of a first measurement resource set, and the first measurement resource set includes the second time-frequency resource. Alternatively, the second information indicates an index of the second time-frequency resource, the second information indicates an index of a first reporting configuration, or the second information indicates an index of a first measurement resource set.

In a possible design of the second aspect, the second information further indicates a first time range, and the first time range is a time range in which the first terminal does not need to detect indication information that is from the second network device and that indicates to measure interference.

In a possible design of the second aspect, the second information further indicates a third time-frequency resource, and the third time-frequency resource is an interference measurement resource corresponding to a second interference pattern of the second network device.

For beneficial effects in the second aspect and various possible designs of the second aspect, refer to corresponding descriptions in the first aspect. Details are not described again.

According to a third aspect, this application provides an interference tracking method. The method may be performed by a first network device, or may be performed by a component (for example, a chip or a circuit) disposed in the first network device.

The method may include: A first network device sends first information to a first terminal, where the first information indicates a first time-frequency resource. The first network device sends third information to a second network device, where the third information indicates the first time-frequency resource. The first network device receives first interference information reported by the first terminal, where the first interference information is obtained by the first terminal by measuring interference based on second information that is received from the second network device on the first time-frequency resource.

In a possible design of the third aspect, the first interference information is obtained by the first terminal through measurement on a second time-frequency resource, and the second time-frequency resource is an interference measurement resource corresponding to a first interference pattern of the second network device; and that the first network device receives first interference information reported by the first terminal further includes: The first network device receives one or more of the following information: an identifier of the first interference pattern, an index of the second time-frequency resource, an index of a first reporting configuration, and an index of a first measurement resource set, where the first reporting configuration is a reporting configuration corresponding to the first interference pattern, the first reporting configuration is associated with the second time-frequency resource, and the first measurement resource set includes the second time-frequency resource.

In a possible design of the third aspect, the method further includes: The first network device receives second interference information reported by the first terminal, where the second interference information is obtained by the first terminal by measuring interference on a third time-frequency resource based on the second information, and the third time-frequency resource is an interference measurement resource corresponding to a second interference pattern of the second network device.

In a possible design of the third aspect, that the first network device receives first interference information reported by the first terminal includes: The first network device receives a first measurement report from the first terminal, where the first measurement report includes the first interference information, the first measurement report further includes first indication information, and the first indication information indicates the second network device; or the first measurement report is sent at a first moment, and the first moment is an interference reporting moment associated with the second network device.

For beneficial effects in the third aspect and various possible designs of the third aspect, refer to corresponding descriptions in the first aspect. Details are not described again.

According to a fourth aspect, this application provides an interference tracking method. The method may be performed by a first terminal, or may be performed by a component (for example, a chip or a circuit) disposed in the first terminal.

The method may include: A first terminal receives ninth information from a second network device, where the ninth information indicates one or more of the following information: a seventh time-frequency resource, a first precoding matrix, and a first transmit power, the seventh time-frequency resource is a time-frequency resource scheduled by the second network device for a second terminal, the first precoding matrix is a precoding matrix used for receiving and sending a signal between the second network device and the second terminal, and the first transmit power is a transmit power used for receiving and sending a signal between the second network device and the second terminal. The first terminal reports fourth interference information obtained based on the ninth information to a first network device.

In the foregoing technical solution, the first terminal may determine interference based on information that is sent by the second network device and that indicates an interference pattern, and report the interference to the first network device. In this way, when a channel between the second network device and the first terminal slowly changes, the first terminal does not need to frequently measure interference. The second network device only needs to notify the first terminal when the interference pattern changes, and the first terminal obtains interference based on the ninth information. In this way, the first terminal can accurately track interference caused by the second network device, to effectively reduce power consumption of a terminal and save resources and energy.

In a possible design of the fourth aspect, the method further includes: The first terminal receives seventh information from the first network device, where the seventh information indicates a sixth time-frequency resource. That a first terminal receives ninth information from a second network device includes: The first terminal receives the ninth information on the sixth time-frequency resource.

In a possible design of the fourth aspect, the ninth information is used to determine interference in a third interference pattern of the second network device. That the first terminal reports fourth interference information obtained based on the ninth information to a first network device further includes: The first terminal reports an identifier of the third interference pattern and/or indication information of the seventh time-frequency resource.

In the foregoing technical solution, when reporting the fourth interference information, the first terminal may further report identification information of the third interference pattern corresponding to the fourth interference information, for example, the identifier of the third interference pattern and/or the indication information of the seventh time-frequency resource, so that the first network device can identify, based on the identification information of the third interference pattern, that the first terminal determines interference in the third interference pattern of the second network device.

In a possible design of the fourth aspect, the method further includes: The first terminal receives tenth information from the second network device on the sixth time-frequency resource, where the tenth information indicates one or more of the following information: an eighth time-frequency resource, a second precoding matrix, and a second transmit power, the eighth time-frequency resource is another time-frequency resource scheduled by the second network device for the second terminal, the second precoding matrix is another precoding matrix used for receiving and sending a signal between the second network device and the second terminal, the second transmit power is another transmit power used for receiving and sending a signal between the second network device and the second terminal, and the tenth information is used to determine interference in a fourth interference pattern of the second network device. The first terminal reports fifth interference information obtained based on the tenth information to the first network device.

In the foregoing technical solution, if interference caused by the second network device is uncertain (for example, there may be a plurality of interference patterns or a combination of a plurality of interference patterns), or the second network device has a plurality of interference patterns, the second network device may send, on the sixth time-frequency resource, a plurality of pieces of information that respectively indicate respective interference patterns, so that the first terminal can separately determine and report interference in the plurality of interference patterns based on information about the plurality of interference patterns, and then accurately determine interference caused by the second network device.

In a possible design of the fourth aspect, the method further includes: The first terminal receives eleventh information from the second network device on the sixth time-frequency resource, where the eleventh information indicates a third time range, the third time range is a time range in which the first terminal does not need to detect information indicating an interference pattern from the second network device, and the information indicating the interference pattern specifically indicates one or more of a time-frequency resource scheduled by the second network device, a used precoding matrix, and a used signal transmit power.

In the foregoing technical solution, the interference pattern of the second network device may remain unchanged in the third time range. Therefore, the second network device may indicate, by using the eleventh information, a time range in which the first terminal does not need to detect the information indicating the interference pattern, or may be understood as indicating a time range in which the terminal does not need to determine/report interference, to effectively save resources (including computing resources and energy) of the first terminal.

In a possible design of the fourth aspect, the fourth interference information is included in a second measurement report and sent to the first network device. The second measurement report further includes first indication information, and the first indication information indicates the second network device; or the second measurement report is sent at a first moment, and the first moment is an interference reporting moment associated with the second network device.

According to a fifth aspect, this application provides an interference tracking method. The method may be performed by a second network device, or may be performed by a component (for example, a chip or a circuit) disposed in the second network device.

The method may include: A second network device receives eighth information from a first network device, where the eighth information indicates a sixth time-frequency resource. The second network device sends ninth information on the sixth time-frequency resource, where the ninth information indicates one or more of the following information: a seventh time-frequency resource, a first precoding matrix, and a first transmit power, the seventh time-frequency resource is a time-frequency resource scheduled by the second network device for a second terminal, the first precoding matrix is a precoding matrix used for receiving and sending a signal between the second network device and the second terminal, and the first transmit power is a transmit power used for receiving and sending a signal between the second network device and the second terminal.

In a possible design of the fifth aspect, the ninth information is used by a first terminal to determine interference in a third interference pattern of the second network device.

In a possible design of the fifth aspect, the method further includes: The second network device sends tenth information on the sixth time-frequency resource, where the tenth information indicates one or more of the following information: an eighth time-frequency resource, a second precoding matrix, and a second transmit power, the eighth time-frequency resource is another time-frequency resource scheduled by the second network device for the second terminal, the second precoding matrix is another precoding matrix used for receiving and sending a signal between the second network device and the second terminal, the second transmit power is another transmit power used for receiving and sending a signal between the second network device and the second terminal, and the tenth information is used to determine interference in a fourth interference pattern of the second network device.

In a possible design of the fifth aspect, the method further includes: The second network device sends eleventh information on the sixth time-frequency resource, where the eleventh information indicates a third time range, the third time range is a time range in which the first terminal does not need to detect information indicating an interference pattern from the second network device, and the information indicating the interference pattern specifically indicates one or more of a time-frequency resource scheduled by the second network device, a used precoding matrix, and a used signal transmit power.

For beneficial effects in the fifth aspect and various possible designs of the fifth aspect, refer to corresponding descriptions in the fourth aspect. Details are not described again.

According to a sixth aspect, this application provides an interference tracking method. The method may be performed by a first network device, or may be performed by a component (for example, a chip or a circuit) disposed in the first network device.

The method may include: A first network device sends seventh information to a first terminal, where the seventh information indicates a sixth time-frequency resource. The first network device sends the seventh information to a second network device. The first network device receives fourth interference information reported by the first terminal.

In a possible design of the sixth aspect, the fourth interference information is interference information from a third interference pattern of the second network device determined by the first terminal. That the first network device receives fourth interference information reported by the first terminal further includes: The first network device receives an identifier of the third interference pattern and/or indication information of a seventh time-frequency resource that are/is reported by the first terminal.

In a possible design of the sixth aspect, the method further includes: The first network device receives fifth interference information reported by the first terminal, where the fifth interference information is interference information determined by the first terminal in a fourth interference pattern of the second network device.

In a possible design of the sixth aspect, that the first network device receives fourth interference information reported by the first terminal includes: The first network device receives a second measurement report from the first terminal, where the second measurement report includes the fourth interference information, the second measurement report further includes first indication information, and the first indication information indicates the second network device; or the second measurement report is sent at a first moment, and the first moment is an interference reporting moment associated with the second network device.

In a possible design of the sixth aspect, the method further includes: The first network device receives sixth interference information reported by the first terminal, where the sixth interference information is interference information from a third network device determined by the first terminal.

For beneficial effects in the sixth aspect and the various possible designs of the sixth aspect, refer to corresponding descriptions in the fourth aspect. Details are not described again.

According to a seventh aspect, this application provides an interference tracking method. The method may be performed by a first terminal, or may be performed by a component (for example, a chip or a circuit) disposed in the first terminal.

The method may include: A first terminal receives fifteenth information from a first network device, where the fifteenth information indicates an eleventh time-frequency resource. The first terminal receives a first reference signal on the eleventh time-frequency resource. The first terminal reports seventh interference information obtained through measurement based on the first reference signal to the first network device.

In a possible design of the seventh aspect, the first reference signal is from a second network device.

In the foregoing technical solution, the first terminal may measure interference from the second network device based on the received first reference signal from the second network device, and report the interference to the first network device. In this way, the first terminal can accurately determine interference caused by the second network device, and report accurate interference information to the first network device, so that the first network device can perform more accurate data scheduling, to effectively improve data transmission reliability.

In a possible design of the seventh aspect, the eleventh time-frequency resource includes N discretely configured PRBs, where N is a positive integer.

In the foregoing technical solution, the first network device is allowed to configure an interference measurement resource discrete in frequency domain for the first terminal based on an actual requirement (for example, a specific position of a frequency domain resource scheduled when the second network device schedules data transmission), to effectively reduce resource overheads.

In a possible design of the seventh aspect, the method further includes: The first terminal receives seventeenth information from the first network device or the second network device, where the seventeenth information indicates a size of a subband of the eleventh time-frequency resource, and the size of the subband is related to a scheduling granularity of the second network device. That the first terminal reports seventh interference information obtained through measurement based on the first reference signal to the first network device includes: The first terminal obtains, through measurement based on the first reference signal received in at least one subband of the eleventh time-frequency resource, the seventh interference information corresponding to the at least one subband, and reports the seventh interference information corresponding to the at least one subband to the first network device.

In the foregoing technical solution, a feedback granularity of the first terminal may alternatively be determined based on a granularity of a frequency domain resource scheduled when the second network device schedules data transmission, so that the first terminal can more accurately feed back interference caused by the second network device.

In a possible design of the seventh aspect, the fifteenth information may further indicate whether to precode the first reference signal, so that the first terminal can report interference information or channel information based on whether the first reference signal is precoded.

In a possible design of the seventh aspect, the first reference signal corresponds to a fifth interference pattern of the second network device; and the method further includes: The first terminal receives a second reference signal from the second network device, where the second reference signal corresponds to a sixth interference pattern of the second network device. The first terminal reports eighth interference information obtained through measurement based on the second reference signal to the first network device.

In the foregoing technical solution, if interference caused by the second network device is uncertain (for example, there may be a plurality of interference patterns or a combination of a plurality of interference patterns), or the second network device has a plurality of interference patterns, the second network device may send a plurality of reference signals to the first terminal, so that the first terminal can receive the plurality of reference signals, separately measure and report interference in the plurality of interference patterns, and then accurately determine interference caused by the second network device.

In a possible design of the seventh aspect, a time-frequency resource on which the first reference signal is located is different from a time-frequency resource on which the second reference signal is located; and/or a sending sequence of the first reference signal is different from a sending sequence of the second reference signal.

In a possible design of the seventh aspect, the seventh interference information is included in a third measurement report and sent to the first network device. The third measurement report further includes first indication information, and the first indication information indicates the second network device; or the third measurement report is sent at a first moment, and the first moment is an interference reporting moment associated with the second network device.

According to an eighth aspect, this application provides an interference tracking method. The method may be performed by a second network device, or may be performed by a component (for example, a chip or a circuit) disposed in the second network device.

The method may include: A second network device receives fifteenth information from a first network device, where the fifteenth information indicates an eleventh time-frequency resource. The second network device sends a first reference signal on the eleventh time-frequency resource, where the first reference signal is used by a first terminal to measure interference from the second network device.

In a possible design of the eighth aspect, the eleventh time-frequency resource includes N discretely configured PRBs, where N is a positive integer.

In a possible design of the eighth aspect, the method further includes: The second network device sends seventeenth information to the first terminal, where the seventeenth information indicates a size of a subband of the eleventh time-frequency resource, and the size of the subband is related to a scheduling granularity of the second network device.

In a possible design of the eighth aspect, the fifteenth information further indicates whether to precode the first reference signal.

In a possible design of the eighth aspect, the first reference signal corresponds to a fifth interference pattern of the second network device; and the method further includes: The second network device sends a second reference signal, where the second reference signal corresponds to a sixth interference pattern of the second network device.

In a possible design of the eighth aspect, a time-frequency resource on which the first reference signal is located is different from a time-frequency resource on which the second reference signal is located; and/or a sending sequence of the first reference signal is different from a sending sequence of the second reference signal.

For beneficial effects in the eighth aspect and the possible designs of the eighth aspect, refer to corresponding descriptions in the seventh aspect. Details are not described again.

According to a ninth aspect, this application provides an interference tracking method. The method may be performed by a first network device, or may be performed by a component (for example, a chip or a circuit) disposed in the first network device.

The method may include: A first network device sends fifteenth information to a first terminal, where the fifteenth information indicates an eleventh time-frequency resource. The first network device sends sixteenth information to a second network device, where the sixteenth information indicates the eleventh time-frequency resource. The first network device receives seventh interference information from the first terminal, where the seventh interference information is obtained by the first terminal through measurement based on a first reference signal that is received from the second network device on the eleventh time-frequency resource.

In a possible design of the ninth aspect, the first time-frequency resource includes N discretely configured PRBs, where N is a positive integer.

In a possible design of the ninth aspect, the method further includes: The first network device sends seventeenth information to the first terminal, where the seventeenth information indicates a size of a subband of the eleventh time-frequency resource, and the size of the subband is related to a scheduling granularity of the second network device. That the first network device receives seventh interference information from the first terminal includes: The first network device receives, from the first terminal, the seventh interference information corresponding to at least one subband of the eleventh time-frequency resource, where the seventh interference information corresponding to the at least one subband is obtained through measurement based on the first reference signal received in the at least one subband.

In a possible design of the ninth aspect, the fifteenth information further indicates whether to precode the first reference signal.

In a possible design of the ninth aspect, the first reference signal corresponds to a fourth interference pattern of the second network device; and the method further includes: The first network device receives eighth interference information from the first terminal, where the eighth interference information is obtained by the first terminal through measurement based on a received second reference signal from the second network device, and the second reference signal corresponds to a fifth interference pattern of the second network device.

In a possible design of the ninth aspect, a time-frequency resource on which the first reference signal is located is different from a time-frequency resource on which the second reference signal is located; and/or a sending sequence of the first reference signal is different from a sending sequence of the second reference signal.

In a possible design of the ninth aspect, that the first network device receives seventh interference information from the first terminal includes: The first network device receives a third measurement report from the first terminal, where the third measurement report includes the seventh interference information, the third measurement report further includes first indication information, and the first indication information indicates the second network device; or the third measurement report is sent at a first moment, and the first moment is an interference reporting moment associated with the second network device.

For beneficial effects in the ninth aspect and the possible designs of the ninth aspect, refer to corresponding descriptions in the seventh aspect. Details are not described again.

According to a tenth aspect, this application provides an interference tracking method. The method may be performed by a first terminal, or may be performed by a component (for example, a chip or a circuit) disposed in the first terminal.

The method may include: A first terminal receives nineteenth information from a first network device, where the nineteenth information indicates a fourteenth time-frequency resource. The first terminal sends a fourth reference signal on the fourteenth time-frequency resource, where the fourth reference signal is used to measure a channel.

In the foregoing technical solution, the first terminal may alternatively send the fourth reference signal used to measure the channel. A second network device performs channel measurement based on the received fourth reference signal, and sends, to the first network device, channel information obtained through measurement and information indicating an interference pattern. The first network device determines, based on the channel information and the information indicating the interference pattern, interference caused by the second network device to the first terminal. According to the method, interference caused by the second network device to a second terminal can be accurately determined, and resource overheads on an air interface can be effectively reduced.

In a possible design of the tenth aspect, the fourteenth time-frequency resource includes N discretely configured PRBs, where N is a positive integer.

In the foregoing technical solution, the first network device is allowed to configure, for the first terminal based on an actual requirement (for example, a specific position of a frequency domain resource scheduled when the second network device schedules data transmission), a discrete resource for sending a reference signal in frequency domain, to effectively reduce resource overheads.

According to an eleventh aspect, this application provides an interference tracking method. The method may be performed by a second network device, or may be performed by a component (for example, a chip or a circuit) disposed in the second network device.

The method may include: A second network device receives twentieth information from a first network device, where the twentieth information indicates a fourteenth time-frequency resource. The second network device receives a fourth reference signal from a first terminal on the fourteenth time-frequency resource. The second network device sends, to the first network device, twenty-first information and channel information that is obtained by performing channel measurement based on the fourth reference signal, where the twenty-first information indicates one or more of the following information: a fifteenth time-frequency resource, a fourth precoding matrix, and a fourth transmit power, the fifteenth time-frequency resource is a time-frequency resource scheduled by the second network device for a second terminal, the fourth precoding matrix is a coding matrix used for data transmission between the second network device and the second terminal, and the fourth transmit power is a transmit power used by the second network device to send a signal to the second terminal.

In a possible design of the eleventh aspect, the fourteenth time-frequency resource includes N discretely configured PRBs, where N is a positive integer.

For beneficial effects in the eleventh aspect and the various possible designs of the eleventh aspect, refer to corresponding descriptions in the tenth aspect. Details are not described again.

According to a twelfth aspect, this application provides an interference tracking method. The method may be performed by a first network device, or may be performed by a component (for example, a chip or a circuit) disposed in the first network device.

The method may include: A first network device sends nineteenth information to a first terminal, where the nineteenth information indicates a fourteenth time-frequency resource, and the fourteenth time-frequency resource is used by the first terminal to send a fourth reference signal. The first network device sends twentieth information to a second network device, where the twentieth information indicates the fourteenth time-frequency resource. The first network device receives channel information and twenty-first information from the second network device, where the channel information is obtained by the second network device by performing channel measurement based on the fourth reference signal, the twenty-first information indicates one or more of the following information: a fifteenth time-frequency resource, a fourth precoding matrix, and a fourth transmit power, the fifteenth time-frequency resource is a time-frequency resource scheduled by the second network device for a second terminal, the fourth precoding matrix is a precoding matrix used for data transmission between the second network device and the second terminal, and the fourth transmit power is a transmit power used by the second network device to send a signal to the second terminal. The first network device schedules the first terminal based on the channel information and the twenty-first information.

In a possible design of the twelfth aspect, the fourteenth time-frequency resource includes N discretely configured PRBs, where N is a positive integer.

For beneficial effects in the twelfth aspect and the possible designs of the twelfth aspect, refer to corresponding descriptions in the tenth aspect. Details are not described again.

According to a thirteenth aspect, this application provides a communication apparatus. An embodiment of this application provides a communication apparatus. The apparatus has a function of implementing the first terminal in the foregoing aspects. The apparatus may be a terminal, or may be a chip included in the terminal.

The communication apparatus may also have a function of implementing the first network device in the foregoing aspects, or have a function of implementing the second network device in the foregoing aspects. The apparatus may be a network device, or may be a chip included in the network device.

The function of the communication apparatus may be implemented by hardware, or may be implemented by hardware executing corresponding software. The hardware or the software includes one or more modules, units, or means (means) corresponding to the function.

In a possible design, a structure of the apparatus includes a processing module and a transceiver module. The processing module is configured to support the apparatus in performing a corresponding function of the first terminal in the foregoing aspects, performing a corresponding function of the second network device in the foregoing aspects, or performing a corresponding function of the first network device in the foregoing aspects. The transceiver module is configured to support communication between the apparatus and another communication device. For example, when the apparatus is a first terminal, the apparatus may receive first information from a first network device. The communication apparatus may further include a storage module. The storage module is coupled to the processing module, and stores program instructions and data that are necessary for the apparatus. In an example, the processing module may be a processor, the communication module may be a transceiver, and the storage module may be a memory. The memory may be integrated with the processor, or may be disposed separately from the processor.

In another possible design, a structure of the apparatus includes a processor, and may further include a memory. The processor is coupled to the memory, and may be configured to execute computer program instructions stored in the memory, so that the apparatus performs the methods in the foregoing aspects. Optionally, the apparatus further includes a communication interface, and the processor is coupled to the communication interface. When the apparatus is a first terminal, a first network device, or a second network device, the communication interface may be a transceiver or an input/output interface. When the apparatus is a chip included in the terminal, a chip included in the first network device, or a chip included in the second network device, the communication interface may be an input/output interface of the chip. Optionally, the transceiver may be a transceiver circuit, and the input/output interface may be an input/output circuit.

According to a fourteenth aspect, an embodiment of this application provides a chip system, including a processor, where the processor is coupled to a memory, the memory is configured to store a program or instructions, and when the program or the instructions are executed by the processor, the chip system is enabled to implement the methods in the foregoing aspects.

Optionally, the chip system further includes an interface circuit, and the interface circuit is configured to exchange code instructions to the processor.

Optionally, there may be one or more processors in the chip system, and the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a nontransitory processor, for example, a read-only memory ROM. The memory and the processor may be integrated on a same chip, or may be separately disposed on different chips.

According to a fifteenth aspect, an embodiment of this application provides a computer-readable storage medium, where the computer-readable storage medium stores a computer program or instructions, and when the computer program or the instructions are executed, a communication apparatus is enabled to perform the methods in the foregoing aspects.

According to a sixteenth aspect, an embodiment of this application provides a computer program product. When a communication apparatus executes the computer program product, the communication apparatus is enabled to perform the method in any one of the foregoing aspects or the possible designs of the foregoing aspects.

According to a seventeenth aspect, an embodiment of this application provides a communication system. The communication system includes a first network device, a second network device, and a first terminal. Optionally, the communication system may further include a third network device. Optionally, the communication system may further include a core network device.

### BRIEF DESCRIPTION OF DRAWINGS

FIG. 1 is a schematic diagram of a system architecture to which an embodiment of this application is applicable;
FIG. 2 is a schematic diagram of an inter-cell interference measurement scenario to which an embodiment of this application is applicable;
FIG. 3 is a schematic diagram of downlink channel/interference measurement and reporting according to an embodiment of this application;
FIG. 4 is a schematic flowchart of an interference tracking method according to an embodiment of this application;
FIG. 5 is a schematic diagram of a periodic first time-frequency resource according to an embodiment of this application;
FIG. 6 is a schematic diagram of a first time range according to an embodiment of this application;
FIG. 7 is a schematic diagram of interference measurement when a first terminal does not distinguish between interference sources according to an embodiment of this application;
FIG. 8 is a schematic flowchart of another interference tracking method according to an embodiment of this application;
FIG. 9 is a schematic diagram of a position at which a terminal measures an interference channel in another interference tracking method according to an embodiment of this application;
FIG. 10 is a schematic flowchart of still another interference tracking method according to an embodiment of this application;
FIG. 11 is a schematic diagram of an eleventh time-frequency resource discretely configured in frequency domain according to an embodiment of this application;
FIG. 12 is a schematic flowchart of yet another interference tracking method according to an embodiment of this application;
FIG. 13 is a schematic diagram of a structure of a communication apparatus according to an embodiment of this application;
FIG. 14 is another schematic diagram of a structure of a communication apparatus according to an embodiment of this application; and
FIG. 15 is another schematic diagram of a structure of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, a future communication system, or another similar communication system.

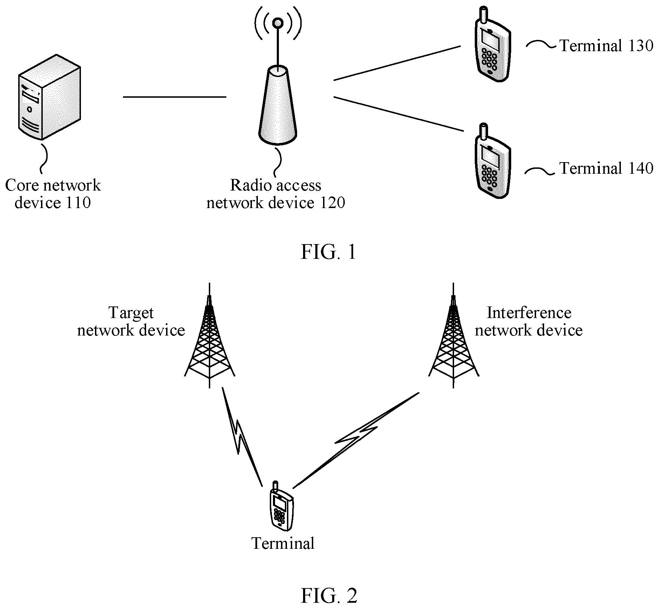

FIG. 1 is a schematic diagram of a network architecture of a communication system according to this application. The communication system includes a core network device 110, a radio access network device 120, and at least one terminal (for example, a terminal 130 and a terminal 140 in FIG. 1). The terminal is connected to the radio access network device in a wireless manner, and the radio access network device is connected to the core network device in a wireless or wired manner. The core network device and the radio access network device may be different physical devices independent of each other, or functions of the core network device and logical functions of the radio access network device may be integrated into a same physical device, or a part of functions of the core network device and a part of functions of the radio access network device may be integrated into one physical device. The terminal may be at a fixed position, or may be mobile. FIG. 1 is only a schematic diagram. The communication system may further include another network device, for example, may further include a wireless relay device and a wireless backhaul device, which are not shown in FIG. 1. Quantities of core network devices, radio access network devices, and terminals included in the communication system are not limited in this embodiment of this application.

It should be understood that the radio access network device described in this embodiment of this application may correspond to different devices in different communication systems. For example, in a 5G system, the radio access network device corresponds to a 5G access network device, for example, a gNB or an ng-eNB, and in a 4G system, corresponds to a 4G access network device, for example, an eNB or an en-gNB.

The radio access network device and the terminal may communicate with each other by using a licensed spectrum, or may communicate with each other by using an unlicensed spectrum, or may communicate with each other by using both a licensed spectrum and an unlicensed spectrum. The network device and the terminal may communicate with each other by using a spectrum sub-6 gigahertz (gigahertz, GHz), or may communicate with each other by using a spectrum above 6 GHz, or may communicate with each other by using both a spectrum sub-6 GHz and a spectrum above 6 GHz. A spectrum resource used between the network device and the terminal is not limited in this embodiment of this application.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the communication network architecture and the emergence of new service scenarios, the technical solutions provided in embodiments of this application are also applicable to similar technical problems.

The following explains and describes some terms in embodiments of this application, to help a person skilled in the art have a better understanding.
(1) A terminal in embodiments of this application is a device having a wireless transceiver function. The terminal is connected to a radio access network device in a wireless manner, to access a communication system. The terminal may also be referred to as a terminal device, user equipment (user equipment, UE), a mobile station, a mobile terminal, or the like. The terminal may be a mobile phone, a tablet computer, a computer having a wireless transceiver function, a virtual reality terminal, an augmented reality terminal, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal are not limited in embodiments of this application.

By way of example and not limitation, the terminal may alternatively be a wearable device. The wearable device may also be referred to as a wearable intelligent device, an intelligent wearable device, or the like, and is a generic term for wearable devices that are developed by applying wearable technologies to intelligently design daily wear, such as glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

The terminal may alternatively be an in-vehicle module, an onboard component, an automotive chip, or an on board unit that is built in a vehicle as one or more components or units. The vehicle may implement a method in this application by using the in-vehicle module, the onboard component, the automotive chip, or the on board unit that is built in the vehicle.

(2) A radio access network device in embodiments of this application is a device that is in a network and that enables a terminal to access a wireless network device. The radio access network device is a node in a radio access network, may also be referred to as a base station, or may be referred to as a RAN node (or device). In this application, the radio access network device may be referred to as a network device for short. Unless otherwise specified, all network devices in the following content refer to the radio access network device. The radio access network device may be a base station (base station), an evolved NodeB (evolved NodeB, eNodeB) in an LTE system or an LTE-advanced system (LTE-Advanced, LTE-A), a next generation NodeB (next generation NodeB, gNB) in a 5G communication system, or a transmission reception point (transmission reception point, TRP), a baseband unit (baseband unit, BBU), a Wi-Fi access point (access point, AP), a base station in a future mobile communication system, an access node in a Wi-Fi system, or the like. The radio access network device may alternatively be a module or a unit that completes some functions of the base station. For example, the radio access network device may be a central unit (central unit, CU) or a distributed unit (distributed unit, DU). A specific technology used by the radio access network device and a specific device form of the radio access network device are not limited in embodiments of this application.

For example, in a network structure, the radio access network device may be a CU node, a DU node, or an access network device including a CU node and a DU node. Specifically, the CU node is configured to support protocols such as radio resource control (radio resource control, RRC), packet data convergence protocol (packet data convergence protocol, PDCP), and service data adaptation protocol (service data adaptation protocol, SDAP). The DU node is configured to support a radio link control (radio link control, RLC) layer protocol, a medium access control (medium access control, MAC) layer protocol, and a physical layer protocol.

The radio access network device and the terminal in embodiments of this application may be deployed on land, including an indoor device, an outdoor device, a handheld device, or a vehicle-mounted device; may be deployed on water; or may be deployed on an airplane, a balloon, and a satellite in the air. An application scenario of the network device and the terminal is not limited in embodiments of this application.

It should be noted that, terms "system" and "network" in embodiments of this application may be used interchangeably. "A plurality of' means two or more. In view of this, "a plurality of may also be understood as "at least two" in embodiments of this application. "At least one" may be understood as one or more, for example, one, two, or more. For example, "including at least one" means including one, two, or more, and does not limit specific items that are included. For example, if at least one of A, B, and C is included, A, B, C, A and B, A and C, B and C, or A, B, and C may be included. Similarly, understanding of descriptions such as "at least one type" is similar. The term "and/or" describes an association relationship between associated objects and indicates that three relationships may exist. For example, A and/or B may indicate the following three cases: Only A exists, both A and B exist, and only B exists. In addition, the character "/" generally indicates an "or" relationship between the associated objects.

Unless otherwise stated, ordinal numbers such as "first" and "second" in embodiments of this application are used to distinguish between a plurality of objects, but are not intended to limit an order, a time sequence, priorities, or importance of the plurality of objects. In addition, descriptions of "first" and "second" do not necessarily indicate that objects are different.

Embodiments of this application are applicable to an inter-cell interference measurement scenario. As shown in FIG. 2, a communication system includes a target network device, an interference network device, and a terminal. It should be noted that FIG. 2 is merely an example, and a quantity of interference network devices included in the communication system is not limited in this embodiment of this application.

The target network device is a network device accessed by the terminal, and may also be referred to as a serving network device, or referred to as a target station or a serving station for short. The terminal may communicate with the target network device. For example, the terminal may receive control information and data information from the target network device, or may send data information to the target network device.

The interference network device is a network device that interferes with the terminal or the target network device, and may also be referred to as an interference source for short. A signal sent by the target network device may cause interference to sending/receiving of the terminal or the target network device. Therefore, the terminal may measure interference caused by the interference network device, and report the measured interference to the target network device. Alternatively, the target network device may obtain, through interaction with the interference network device, interference caused by the interference network device.

For an NR system, a channel or interference may be measured by sending a reference signal (reference signal, RS) with a known sequence. Specifically, interference on a downlink channel is measured by using a channel state information-reference signal (channel state information-reference signal, CSI-RS), and interference on an uplink channel is measured by using a sounding reference signal (sounding reference signal, SRS). For a TDD system, a channel state may also be obtained by using reciprocity between uplink and downlink channels.

The following separately describes in detail downlink interference/channel measurement and uplink interference/channel measurement in the NR system.

### (1) Downlink channel/interference measurement and feedback

A downlink channel is usually measured by using a CSI-RS. The CSI-RS is sent by a base station, and UE performs measurement. Specifically, the base station sends the CSI-RS for measuring a channel and interference. After receiving the CSI-RS, the UE calculates, based on the received CSI-RS, an indicator that needs to be measured, for example, a rank indicator (rank indicator, RI), a precoding matrix indicator (precoding matrix indicator, PMI), and a channel quality indicator (channel quantity indicator, CQI), and then reports the content.

Two most important parts of a CSI-RS configuration are a CSI-RS reporting configuration (ReportConfig) and a CSI-RS resource configuration (ResourceConfig). The reporting configuration is used to configure a parameter related to channel reporting, for example, a reporting type and a reported measurement indicator. The resource configuration is used to configure related information of a measurement time-frequency resource.

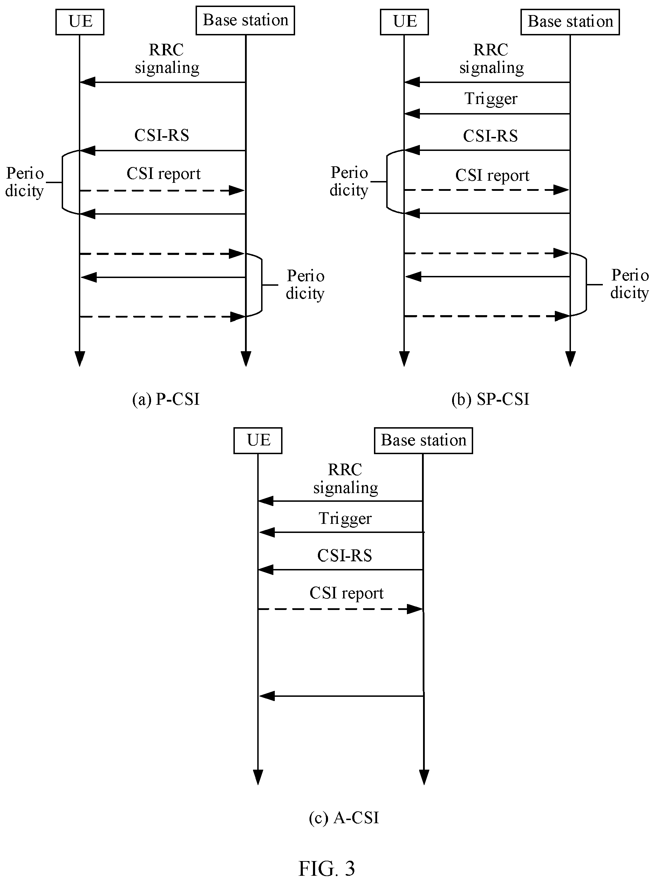

Reporting types of the channel state may be classified into three types: P-CSI, SP-CSI, and A-CSI. As shown in FIG. 3, the P-CSI is configured by using RRC signaling, and is periodically sent after being configured and does not need to be triggered. The SP-CSI is triggered by using a medium access control-control element (medium access control-control element, MAC CE) or downlink control information (downlink control information, DCI) after being configured by using RRC signaling, and is periodically sent after being triggered. The A-CSI is triggered by using DCI after being configured by using RRC signaling, and is reported only once on a specified PUSCH in a specified slot after being triggered.

Reporting of the channel state further supports a wideband feedback and a narrowband feedback. The wideband feedback means that only one value is fed back in an entire reporting bandwidth, and the narrowband feedback means that a feedback is separately performed for each subband (subband) in a reporting bandwidth. A subband size is specifically that shown in the following Table 1. For a fixed partial bandwidth (bandwidth part, BWP), a quantity of physical resource blocks (physical resource blocks, PRBs) included in each subband is fixed. For example, one BWP includes 50 PRBs, and a subband size of the BWP may be 4 or 8. A specific subband size may be specified by using higher layer signaling.

Alternatively, the narrowband feedback may be discrete or continuous. The following uses an example to describe meanings of discrete and continuous narrowband feedbacks. It is assumed that the BWP includes 10 resource blocks (resource blocks, RBs), and a size of each subband is two RBs. In other words, the BWP is divided into five subbands which are respectively marked by numbers 1, 2, 3, 4, and 5. The continuous feedback specifically means that subbands about a feedback are continuous. For example, channel state information in subbands 1, 2, and 3 is fed back, or channel state information in subbands 3, 4, and 5 is fed back. The discrete feedback means that subbands about a feedback are discrete. For example, channel state information in subbands 1, 2, and 4 is fed back.

**Table 1 Relationship between a bandwidth part and a subband size**

| **Bandwidth part (PRBs)** | **Subband size (PRBs)** |
|---|---|
| <24 | N/A |
| 24 to 72 | 4 and 8 |
| 73 to 144 | 8 and 16 |
| 145 to 275 | 16 and 32 |

There may also be three types of CSI-RS measurement resources: periodic, semi-persistent (semi-persistent), and aperiodic (aperiodic) respectively. There is a specific relationship between a reporting type of a channel state and a configuration manner of a measurement resource corresponding to the reporting type of the channel state. Details are shown in the following Table 2. It can be learned from Table 2 that, for a configured periodic measurement resource, P-CSI reporting, SP-CSI reporting, and A-CSI reporting may be supported, and for a configured aperiodic measurement resource, only A-CSI reporting is supported.

**Table 2 Relationship between a CSI-RS measurement resource and a reporting type**

| **CSI-RS resource** | **P-CSI** | **SP-CSI** | **A-CSI** |
|---|---|---|---|
| Periodic | Supported | Supported | Supported |
| Semi-persistent | Not supported | Supported | Supported |
| Aperiodic | Not supported | Not supported | Supported |

From the perspective of a function, CSI-RS measurement resources may be classified into three types: NZP-CSI-RS for channel, ZP-CSI-RS for interference, and NZP-CSI-RS for interference respectively.

The NZP-CSI-RS for channel represents a non zero power-channel state information-reference signal (non zero power-channel state information-reference signal, NZP-CSI-RS) used for channel measurement. According to a conventional technology, this type of resource configuration is mandatory. The ZP-CSI-RS for channel represents a zero power-channel state information-reference signal (zero power-channel state information-reference signal, ZP-CSI-RS) used for interference measurement. According to the conventional technology, this type of resource configuration is optional. If this type of resource is configured, resources in a resource set are in a one-to-one correspondence with resources in an NZP-CSI-RS for channel resource set. The NZP-CSI-RS for interference represents an NZP-CSI-RS used for interference measurement. According to the conventional technology, this type of resource configuration is optional.

It can be learned from the foregoing content that the ZP-CSI-RS cannot be separately configured to perform interference measurement, and measurement can be completed only with reference to the NZP-CSI-RS for channel that is in a one-to-one correspondence with a resource of the ZP-CSI-RS.

It should be noted that, an essential meaning of the ZP-CSI-RS is that a target base station does not send any information on a configured resource of the ZP-CSI-RS, and because the target base station does not send any information, the UE performs detection on the resource, and a detected signal is interference. A difference between the NZP-CSI-RS and the ZP-CSI-RS lies in that, for the NZP-CSI-RS, the target base station sends a known sequence on a configured resource of the NZP-CSI-RS, and the UE can obtain a channel/interference through measurement by sending the known sequence.

### (2) Uplink channel/interference measurement and feedback

An uplink channel is usually measured by using an SRS. The SRS is sent by the UE, and the base station performs measurement, to obtain channel/interference information of uplink transmission.

SRSs may also be classified into a periodic SRS (P-SRS), a semi-persistent SRS (SP-SRS), and an aperiodic SRS (A-SRS). Transmission of the P-SRS is configured by using RRC signaling, and the P-SRS is sent once at an interval of a fixed period after the configuration. Transmission of the SP-SRS is configured by using RRC signaling, and is triggered by using a MAC CE, and is also sent one at an interval of a fixed period after being triggered. Transmission of the A-SRS is configured by using RRC signaling, and is triggered by using DCI, and a specified SRS is sent in a specified slot after being triggered.

A plurality of SRS transmissions may be configured for one UE. Usually, different SRS transmissions cannot be simultaneously sent. One SRS is positioned on the last several symbols (a maximum of the last six symbols) in a slot in time domain, and a position of the SRS is configurable in frequency domain, and may be a wideband or a narrowband. In addition, the SRS supports frequency hopping transmission, that is, a same SRS may occupy different frequency band resources on different transmission occasions (occasions).

### Embodiment 1

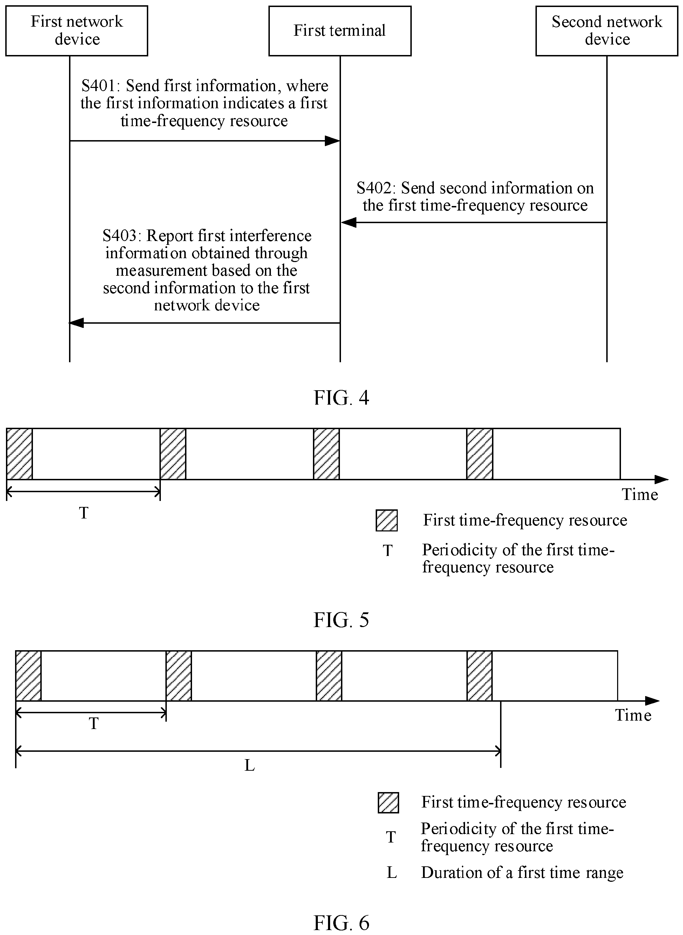

FIG. 4 is a schematic flowchart of an interference tracking method according to an embodiment of this application. The method includes the following steps.

Step S401: A first network device sends first information to a first terminal, where the first information indicates a first time-frequency resource.

Correspondingly, the first terminal receives the first information from the first network device.

In this embodiment of this application, the first network device is a serving network device of the first terminal, and may also be referred to as a serving base station, a serving node, or the like. The first terminal accesses the first network device, and the first network device is responsible for providing a communication service for the first terminal.

A second network device is another network device adjacent to the first network device. When a time-frequency resource used by the second network device for data transmission overlaps a time-frequency resource scheduled by the first network device for the first terminal, on an overlapped time-frequency resource, the first terminal may receive a signal sent by the second network device or receive a signal sent by another terminal (for example, a second terminal) that accesses the second network device. This indicates that the second network device causes interference to the first terminal. Therefore, in this embodiment of this application, the second network device may be understood as an interference source, a reason why the second network device causes interference to the first terminal may be that the second network device is close to the first network device or the first terminal, or may be another reason. This is not limited.

In this embodiment of this application, the first network device may configure the first time-frequency resource for the first terminal. The first time-frequency resource may be used by the first terminal to receive, from the second network device, indication information indicating the first terminal to measure interference. The indication information indicating the first terminal to measure interference may also be referred to as a measurement indication or an interference measurement indication for short. A meaning of the indication information indicating the first terminal to measure interference is described in detail below in this application.

The first time-frequency resource may be a periodic time-frequency resource configured by the first network device for the first terminal. The periodic time-frequency resource means that after the first network device configures the first time-frequency resource, the first time-frequency resource periodically appears at a same time-frequency resource position. As shown in FIG. 5, after the first network device configures the first time-frequency resource for the first terminal, the first terminal may periodically detect, on the first time-frequency resource, the indication information that is from the second network device and that indicates the first terminal to measure interference. It should be noted that if the first time-frequency resource is a periodic time-frequency resource configured by the first network device for the first terminal, in this embodiment of this application, the first time-frequency resource is specifically one periodic time-frequency resource in the periodic time-frequency resources, rather than a plurality of periodic time-frequency resources.

Alternatively, the first time-frequency resource may be an aperiodic time-frequency resource configured by the first network device for the first terminal, and the first network device needs to perform corresponding configuration each time before the first terminal uses the first time-frequency resource.

Optionally, the first network device may configure the first time-frequency resource for the first terminal by using higher layer signaling. For example, the first network device may send RRC signaling to the first terminal, where the RRC signaling carries related information of the first time-frequency resource. Alternatively, the first network device may dynamically configure the first time-frequency resource for the first terminal by using physical layer signaling. Alternatively, the first network device may configure and activate the first time-frequency resource by using both higher layer signaling and physical layer signaling. To be specific, after the first network device configures the first time-frequency resource for the first terminal by using the higher layer signaling, the first time-frequency resource is in an inactive state and cannot be used by the first terminal. The first terminal can normally use the first time-frequency resource only after the first network device activates the first time-frequency resource by using the physical layer signaling. For example, the first terminal receives, on the first time-frequency resource, the indication information that is from the second network device and that indicates the first terminal to measure interference. In other words, the first information may be higher layer signaling and/or physical layer signaling.

Optionally, in this embodiment of this application, after determining the first time-frequency resource, the first network device may further notify the second network device of the first time-frequency resource, so that the second network device may send, to the first terminal, the indication information indicating the first terminal to measure interference when interference to the first terminal changes or in another case in which the first terminal needs to perform interference measurement. For example, the first network device may send third information to the second network device, where the third information also indicates the first time-frequency resource. Correspondingly, the second network device may receive the third information from the first network device. It should be noted that an order in which the first network device sends the first information to the first terminal and the first network device sends the third information to the second network device is not limited in this embodiment of this application.

Step S402: The second network device sends second information on the first time-frequency resource.

Correspondingly, the first terminal receives the second information from the second network device on the first time-frequency resource.

Step S403: The first terminal reports first interference information obtained through measurement based on the second information to the first network device.

Correspondingly, the first network device receives the first interference information reported by the first terminal.

In this embodiment of this application, the second information may indicate the first terminal to measure interference. There may be a plurality of possible indication manners in which the second information indicates to measure interference. Specifically, in a possible implementation, that the second information indicates the first terminal to measure interference may specifically mean that the first terminal performs interference measurement if receiving the second information. For example, the second information may be 1-bit indication information. If a value of the second information received by the first terminal is 1, it indicates that the first terminal needs to measure interference. If a value of the second information received by the first terminal is 0, or no second information is received, it indicates that the first terminal does not need to measure interference.

In another possible implementation, the second information may indicate information related to interference measurement, for example, may include one or more of information such as a time-frequency resource for interference measurement, a measurement indicator, and a sequence for interference measurement. In this way, that the second information indicates the first terminal to measure interference may specifically mean that the first terminal measures interference based on one or more of the information that is related to the interference measurement and that is indicated in the second information.

In still another possible implementation, the second information may indicate information related to interference measurement and reporting, for example, may include one or more of information such as a time-frequency resource for interference measurement, a measurement indicator, a sequence for interference measurement, and a time-frequency resource for reporting interference. In this way, that the second information indicates the first terminal to measure interference may specifically mean that the first terminal measures and reports interference based on one or more of the information that is related to the interference measurement and reporting and that is indicated in the second information.

In this embodiment of this application, after the first terminal receives the second information from the second network device, the first terminal may measure interference on a second time-frequency resource, and report the first interference information obtained through measurement to the first network device. To be specific, the second time-frequency resource is a time-frequency resource for interference measurement, and the first interference information is obtained by the first terminal by measuring interference on the second time-frequency resource. It should be understood that the first interference information may be interference information directly obtained after the first terminal measures interference on the second time-frequency resource, or may be interference information obtained after interference smoothing or other processing is performed based on interference information directly obtained after interference measurement. This is not limited.

In a possible implementation, the first interference information may include an interference matrix or information for describing the interference matrix. For a multi-antenna system, interference obtained by the first terminal through measurement is a matrix, and the first terminal may directly feed back the matrix to the first network device, or feed back a value for describing the matrix to the first network device. In another possible implementation, the first interference information may include a CQI, and interference is implicitly included by using the CQI.

Optionally, the second information may indicate that interference from the second network device changes. To be specific, if the second network device determines that interference caused by the second network device to the first terminal changes or is to change, the second network device may send the second information to the first terminal, to indicate the first terminal to measure interference, so that the first terminal obtains latest interference information and reports the latest interference information to the first network device, and further the first network device can perform more accurate data scheduling for the first terminal based on the latest interference information reported by the first terminal.

In other words, if the first terminal detects the second information on the first time-frequency resource, it may indicate that interference caused by the second network device to the first terminal changes. The first terminal may measure interference based on the second information, and report the first interference information obtained through measurement to the first network device. On the contrary, if the first terminal does not detect the second information on the first time-frequency resource, it may indicate that interference caused by the second network device to the first terminal does not change. In this case, the first terminal may report interference information obtained in previous measurement, or may not report any interference information, or may perform another action. This is not limited in this application. It should be noted that when the first terminal detects no second information on the first time-frequency resource, whether the first terminal chooses to report interference information obtained in previous measurement, does not report any interference information, or performs another action is specified by the first network device.

Optionally, the second time-frequency resource may be a time-frequency resource that is used for interference measurement and that is indicated by the second network device by using the second information, or may be a time-frequency resource that is used for interference measurement and that is preconfigured by the first network device. This is not limited. If the second time-frequency resource is a time-frequency resource that is used for interference measurement and that is indicated by the second network device by using the second information, the second information may include information indicating the second time-frequency resource, for example, may include an index of the second time-frequency resource, or include an index of a first reporting configuration associated with the second time-frequency resource, or include an index of a first measurement resource set in which the second time-frequency resource is located. Optionally, the second information may include indication information indicating the index of the second time-frequency resource, or include indication information indicating the index of the first reporting configuration, or include indication information indicating the index of the first resource set in which the second time-frequency resource is located.

For example, in a possible implementation, the second information may include an index (index) of the second time-frequency resource in a preconfigured measurement resource set, or include indication information indicating the index (index) of the second time-frequency resource in the preconfigured measurement resource set. In this way, the first terminal may determine the second time-frequency resource based on the index of the second time-frequency resource.

In this implementation, it may be considered that an interference measurement resource is directly indicated. In this implementation, the first network device may preconfigure a measurement resource set (ResourceSet) for the first terminal. The measurement resource set includes at least one interference measurement resource, each interference measurement resource has a corresponding index in the measurement resource set, and the second time-frequency resource is one of the at least one interference measurement resource. Optionally, the first network device may further preconfigure a first mapping relationship between an index of each interference measurement resource in the measurement resource set and a specific time-frequency resource position of the interference measurement resource for the first terminal. In this way, after receiving the second information, the first terminal may determine a specific time-frequency resource position of the second time-frequency resource based on the index of the second time-frequency resource in the configured measurement resource set and the first mapping relationship, and further measure interference on the second time-frequency resource.

For example, it is assumed that the preconfigured measurement resource set includes two interference measurement resources: an interference measurement resource 1 and an interference measurement resource 2 respectively. An index of the interference measurement resource 1 is 1, and an index of the interference measurement resource 2 is 2. In an example, the second information may include the index 1 of the interference measurement resource 1, or include indication information indicating the index 1 of the interference measurement resource 1. The second information indicates the first terminal to select the interference measurement resource 1 in the preconfigured measurement resource set to measure interference. In other words, in this case, the second time-frequency resource is the interference measurement resource 1.

In another possible implementation, the second information may include an index of the first reporting configuration (reportconfig) in a reporting configuration set, or include indication information indicating the index of the first reporting configuration in the reporting configuration set, and the first reporting configuration is associated with the second time-frequency resource. In other words, the second time-frequency resource is an interference measurement resource associated with the first reporting configuration. After receiving the second information, the first terminal may determine the index of the first reporting configuration based on the second information, and then determine the interference measurement resource associated with the first reporting configuration as the second time-frequency resource.

In this implementation, it may be considered that an interference measurement resource is indirectly indicated. In this implementation, the first network device may preconfigure a reporting configuration set for the first terminal. The reporting configuration set includes at least one reporting configuration, each reporting configuration has a corresponding index in the reporting configuration set, and each reporting configuration may be associated with at least one interference measurement resource. The first reporting configuration is one reporting configuration in the reporting configuration set, and the second time-frequency resource is the interference measurement resource associated with the first reporting configuration. Optionally, the first network device may further preconfigure, for the first terminal, a second mapping relationship between an index of each reporting configuration in the reporting configuration set and an interference measurement resource (for example, an index of a resource or a specific time-frequency resource position of the resource) associated with the reporting configuration. In this way, after receiving the second information, the first terminal may determine the second time-frequency resource based on the second mapping relationship and the index of the first reporting configuration in the reporting configuration set included in the second information, further measure interference on the second time-frequency resource, and report the first interference information obtained through measurement to the first network device based on an indication of the first reporting configuration. Alternatively, after receiving the second information, the first terminal may determine the second time-frequency resource based on the second mapping relationship and the indication information that is included in the second information and that indicates the index of the first reporting configuration in the reporting configuration set, measure interference on the second time-frequency resource, and report the first interference information obtained through measurement to the first network device based on an indication of the first reporting configuration.

In this embodiment of this application, the reporting configuration may include information such as an index of a reporting configuration, a reporting type, and a reported measurement indicator.

For example, it is assumed that the reporting configuration set includes two reporting configurations: a reporting configuration 1 and a reporting configuration 2 respectively. An index of the reporting configuration 1 is 1, and an index of the reporting configuration 2 is 2. In an example, the second information may include the index 1 of the reporting configuration 1, or the second information may indicate the index 1, to indicate the first terminal to select an interference measurement resource associated with the reporting configuration 1 from the reporting configuration set, to perform interference measurement. In other words, in this case, the second time-frequency resource is the interference measurement resource associated with the reporting configuration 1.

In still another possible implementation, the second information may include the index of the first measurement resource set, or include indication information indicating the index of the first measurement resource set, and the first measurement resource set includes the second time-frequency resource. After receiving the second information, the first terminal may determine the index of the first measurement resource set based on the second information, further determine the first measurement resource set, and then determine the second time-frequency resource from the first measurement resource set according to a specific method. Optionally, the first terminal may consider that a time-frequency resource with greatest interference in time-frequency resources included in the first measurement resource set is the second time-frequency resource. Optionally, the first network device may indicate, by using indication information, a manner in which the first terminal determines the second time-frequency resource from the first measurement resource set. In other words, the first network device may indicate, by using the indication information, how the first terminal determines the second time-frequency resource from the first measurement resource set.

In this implementation, it may be considered that an interference measurement resource is indirectly indicated. In this implementation, the first network device may preconfigure a set of measurement resource sets for the first terminal, and the set of measurement resource sets includes at least one measurement resource set. Optionally, the first network device may further preconfigure a third mapping relationship between an index of each measurement resource set in the set of measurement resource sets and the measurement resource set for the first terminal. In this way, after receiving the second information, the first terminal may determine the first measurement resource set based on the index of the first measurement resource set included in the second information (or the indication information that is included in the second information and that indicates the index of the first measurement resource set) and the third mapping relationship. Further, the second time-frequency resource is determined from the first measurement resource set according to the foregoing method.

In still another possible implementation, the second information may alternatively include information directly indicating a specific time-frequency resource position of the second time-frequency resource.

Optionally, the second time-frequency resource may be a time-frequency resource that interferes with the first terminal in the time-frequency resource scheduled by the second network device for the second terminal accessing the second network device. Optionally, the second time-frequency resource may be a time-frequency resource discrete in frequency domain, for example, includes a plurality of PRBs discretely configured in frequency domain. In other words, in this application, the second time-frequency resource can be configured as discrete in frequency domain based on an actual requirement, and the first terminal does not need to measure interference on an interference-free time-frequency resource, thereby reducing overheads.

For example, the time-frequency resource scheduled by the second network device for the second terminal includes five RBs in frequency domain: an RB 1, an RB 2, an RB 3, an RB 4, and an RB 5 respectively. If the first terminal is interfered only on the RB 1 and the RB 3, in this embodiment of this application, the first terminal only needs to measure interference on the RB 1 and the RB 3. However, in the conventional technology, although the first terminal may feed back only the interference on the RB 1 and the RB 3, the first terminal needs to measure the interference on the RB 1 to the RB 3. This is because in the conventional technology, a resource for measuring interference needs to be continuous.

It should be understood that, that the first terminal measures interference on the second time-frequency resource may include measuring uplink interference and/or downlink interference. Correspondingly, the first interference information may include uplink interference information and/or downlink interference information. Optionally, an interference source of the downlink interference is the second network device, and an interference source of measuring the uplink interference is the second terminal that accesses the second network device.

It can be learned that in this embodiment of this application, the first terminal may receive the second information from the second network device on the first time-frequency resource, measure interference from the second network device based on the second information, and report the first interference information obtained through measurement to the first network device. Because the second network device (that is, the interference source) may send, to the first terminal, the second information indicating the first terminal to measure interference when interference caused by the second network device to the first terminal changes, according to the foregoing technical solution, the first terminal can accurately track a change of interference caused by the second network device, and report more accurate interference information to the first network device, so that the first network device can perform more accurate data scheduling based on the interference information reported by the first terminal, to effectively reduce resource overheads and improve data transmission reliability.

Optionally, the second information may further indicate a first time range. The first time range may be a time range in which the first terminal does not need to detect the indication information that is from the second network device and that indicates the first terminal to measure interference. In this way, after receiving the second information, the first terminal may skip detecting, in the first time range, the indication information that is from the second network device and that indicates the first terminal to measure interference. Alternatively, the first time range may be a time range in which the first terminal does not need to measure interference from the second network device. In this way, after receiving the second information, the first terminal may skip measuring interference from the second network device in the first time range. Alternatively, the first time range may be a time range in which the first terminal does not need to report measured interference from the second network device. In this way, after receiving the second information, the first terminal does not report the measured interference to the first network device even if the interference caused by the second network device is measured in the first time range.

The first time range may also be understood as a time range in which interference caused by the second network device to the first terminal remains unchanged. In other words, if interference caused by the second network device to the first terminal remains unchanged within specific time after this change, the second network device may indicate, to the first terminal by using the second information, the first time range in which the interference caused by the second network device remains unchanged. In this way, the first terminal may skip detecting, in the first time range, the indication information that is from the second network device and that indicates the first terminal to measure interference, or skips measuring the interference from the second network device.

It may be understood that as described above, if the interference caused by the second network device to the first terminal changes, the second network device sends, on the first time-frequency resource, the indication information indicating the first terminal to measure interference. Further, if the first time-frequency resource is a configured periodic time-frequency resource, the first terminal needs to detect, on the first time-frequency resource in each periodicity, the indication information indicating the first terminal to measure interference. Because the interference caused by the second network device to the first terminal remains unchanged in the first time range, the second network device may not send, to the first terminal in the first time range, the indication information indicating the first terminal to measure interference. Therefore, the first terminal does not need to measure the interference from the second network device in the first time range, and does not need to continue to detect, on the first time-frequency resource in the first time range, the indication information indicating the first terminal to measure interference.

It can be learned that the first time range is indicated in the second information in the foregoing manner, so that a quantity of times that the first terminal detects, on the first time-frequency resource, the indication information indicating the first terminal to measure interference can be effectively reduced, detection power consumption of the first terminal can be reduced, and energy can be saved.

In a possible implementation, the second network device may explicitly indicate start time, duration (that is, a time length or duration of the first time range), and/or end time of the first time range in the second information. In another possible implementation, the second network device may alternatively explicitly indicate only duration and/or end time of the first time range in the second information, and the first terminal determines start time of the first time range according to a preset rule. For example, the start time of the first time range may be a specified time point, or may be a time point at which the first terminal receives the second information, or may be start time or end time of the first time-frequency resource. This is not limited in this application.

In still another possible implementation, the first network device may configure an interference measurement periodicity for the first terminal. For example, the interference measurement periodicity may be a periodicity of the first time-frequency resource, or an integer multiple of the periodicity of the first time-frequency resource. This is not limited. In this case, the second network device may indicate, in the second information, a quantity of interference measurement periodicities included in the first time range, indicating that the first terminal does not need to detect, in a specific quantity of interference measurement periodicities after receiving the second information, information that is sent by the second network device on the first time-frequency resource and that indicates the first terminal to measure interference, or indicating that the first terminal does not need to measure interference from the second network device in a specific quantity of interference measurement periodicities after receiving the second information.

In still another possible implementation, the first time-frequency resource configured by the first network device for the first terminal is a periodic resource. In this case, the second network device may indicate, in the second information, a quantity of periodicities of the first time-frequency resource included in the first time range, indicating that the first terminal does not need to detect, in a specific quantity of periodicities after receiving the second information, information that is sent by the second network device on the first time-frequency resource and that indicates the first terminal to measure interference, or indicating that the first terminal does not need to measure interference from the second network device in a specific quantity of periodicities after receiving the second information.

For example, as shown in FIG. 6, the start time of the first time range may be the start time of the first time-frequency resource, the duration of the first time range is L, and a value of L is indicated by the second network device in the second information. Interference caused by the second network device to the first terminal remains unchanged within L after the start time of the first time-frequency resource, and may change or may not change beyond L after the start time of the first time-frequency resource. This is not limited. In this way, after receiving the second information on the first time-frequency resource, the first terminal may skip continuing to detect, within L after the start time of the first time-frequency resource, the indication information that is sent by the second network device and that indicates the first terminal to measure interference.

It should be noted that, in this embodiment of this application, the first time range may be unrelated to an interference pattern of the second network device, or may be related to the interference pattern of the second network device. The first time range is described above by using an example in which the configuration of the first time range is unrelated to the interference pattern of the second network device. If the first time range is related to the interference pattern of the second network device, there may be one corresponding first time range in each interference pattern of the second network device, and the first time range corresponding to each interference pattern may be implemented according to the foregoing method. Details are not described again. Because interference in different interference patterns is independently measured, first time ranges corresponding to different interference patterns are independent of each other, that is, first time ranges (including start time and/or duration) corresponding to different interference patterns may be the same or may be different. This is not limited. Content of the interference pattern is described in detail below in this application.

Optionally, interference caused by the second network device to the first terminal may be in one or more interference patterns (patterns). When information such as a time-frequency resource scheduled by the second network device, a used precoding matrix, or a used signal transmit power is different, the second network device causes different interference to the first terminal. Therefore, a group of information such as a scheduled time-frequency resource, a used precoding matrix, or a used signal transmit power may be referred to as an interference pattern. The used precoding matrix may be identified by using a precoding matrix indicator (precoding matrix indicator, PMI). It should be understood that, for different interference patterns, one or more of the scheduled time-frequency resource, the used precoding matrix, or the used signal transmit power may be different. This is not limited. In addition, one interference pattern may correspond to one interference measurement resource, or may correspond to one reporting configuration. This is not limited.

If interference caused by the second network device to the first terminal may be in only one interference pattern, assuming that the interference pattern is referred to as a first interference pattern, the second network device and the first terminal may perform the method described above. It may be understood that the second time-frequency resource described above corresponds to the first interference pattern of the second network device. In other words, the second time-frequency resource is an interference measurement resource corresponding to the first interference pattern of the second network device. For example, the first interference pattern or a reporting configuration corresponding to the first interference pattern may be associated with the second time-frequency resource. In this way, after receiving the second information from the second network device, the first terminal may measure interference on the second time-frequency resource based on the second information, to obtain the first interference information corresponding to the first interference pattern, and report the first interference information to the first network device.

Optionally, the first terminal may further report one or more of the following information: an identifier of the first interference pattern (for example, a pattern ID), the index of the second time-frequency resource (for example, the index of the second time-frequency resource in the preconfigured measurement configuration set), the index of the first reporting configuration (for example, the index of the first reporting configuration in the preconfigured reporting configuration set), and the index of the first measurement resource set. The first reporting configuration is a reporting configuration corresponding to the first interference pattern, and the first measurement resource set includes the second time-frequency resource. One or more of the information may be understood as identification information of the first interference pattern. In this way, the first terminal reports both the first interference information obtained through measurement and the identification information of the first interference pattern to the first network device, so that the first network device can identify, based on the identification information of the first interference pattern, that the first interference information is interference that is measured by the first terminal in the first interference pattern of the second network device.

If interference caused by the second network device to the first terminal is in a plurality of interference patterns, for example, there are two interference patterns, assuming that the two interference patterns are respectively a first interference pattern and a second interference pattern, the second network device may indicate, in the second information, interference measurement resources respectively corresponding to the first interference pattern and the second interference pattern, so that the first terminal separately measures interference in the two interference patterns, and reports interference information, obtained through measurement, respectively corresponding to the two interference patterns.

Specifically, the second information may indicate the second time-frequency resource and a third time-frequency resource. The second time-frequency resource corresponds to the first interference pattern of the second network device, and the third time-frequency resource corresponds to the second interference pattern of the second network device. That is, the second time-frequency resource is an interference measurement resource corresponding to the first interference pattern, and the third time-frequency resource is an interference measurement resource corresponding to the second interference pattern. For example, the first interference pattern or the first reporting configuration corresponding to the first interference pattern may be associated with the second time-frequency resource, and the second interference pattern or a second reporting configuration corresponding to the second interference pattern may be associated with the third time-frequency resource.

For a manner in which the second information indicates the second time-frequency resource, refer to the foregoing descriptions. Details are not described herein again. For a manner in which the second information indicates the third time-frequency resource, refer to the foregoing manner in which the second information indicates the second time-frequency resource. To be specific, the second information may include an index of the third time-frequency resource, or include an index of the second reporting configuration, where the second reporting configuration is associated with the third time-frequency resource, or include an index of a second measurement resource set, where the second measurement resource set includes the third time-frequency resource, or includes indication information indicating the index of the second time-frequency resource, or includes indication information indicating the index of the second reporting configuration, or includes indication information indicating the index of the second measurement resource set. Details are not described again.

In this way, after receiving the second information from the second network device, the first terminal may measure interference on the second time-frequency resource based on the second information, to obtain the first interference information corresponding to the first interference pattern, and measure interference on the third time-frequency resource, to obtain second interference information corresponding to the second interference pattern. It should be understood that, similar to the first interference information, the second interference information may be interference information directly obtained after the first terminal measures interference on the third time-frequency resource, or may be interference information obtained after interference smoothing or other processing is performed based on interference information directly obtained after interference measurement. This is not limited.

Further, the first terminal may report interference information (for example, the first interference information and/or the second interference information) obtained through measurement to the first network device.

Specifically, in a possible implementation, the first terminal may report the first interference information and the second interference information, that is, the first terminal may feed back the interference information corresponding to the first interference pattern and the interference information corresponding to the second interference pattern together.

Optionally, for the first interference pattern, the first terminal may further report one or more of the following information: the identifier of the first interference pattern (for example, the pattern ID), the index of the second time-frequency resource (for example, the index of the second time-frequency resource in the preconfigured measurement configuration set), the index of the first reporting configuration (for example, the index of the first reporting configuration in the preconfigured reporting configuration set), and the index of the first measurement resource set. The first reporting configuration is a reporting configuration corresponding to the first interference pattern, and the first measurement resource set includes the second time-frequency resource. One or more of the information may be understood as identification information of the first interference pattern. The first terminal reports both the first interference information and the identification information of the first interference pattern to the first network device, so that the first network device can identify, based on the identification information of the first interference pattern, that the first interference information is measured interference information corresponding to the first interference pattern of the second network device.

Similarly, for the second interference pattern, the first terminal may further report one or more of the following information: an identifier of the second interference pattern, the index of the third time-frequency resource (for example, an index of the third time-frequency resource in the preconfigured measurement configuration set), the index of the second reporting configuration (for example, an index of the second reporting configuration in the preconfigured reporting configuration set), and the index of the second measurement resource set. The second reporting configuration is a reporting configuration corresponding to the second interference pattern, and the second measurement resource set includes the third time-frequency resource. One or more of the information may be understood as identification information of the second interference pattern. In this way, the first terminal reports both the second interference pattern and the identification information of the second interference pattern to the first network device, so that the first network device can identify, based on related information of the second interference pattern, that the second interference information is measured interference information corresponding to the second interference pattern of the second network device.

In another possible implementation, the first terminal may alternatively report a combination of the first interference information and the second interference information. The combination may be a result obtained after an operation is performed on the first interference information and the second interference information by using a function, or may be one piece of interference information selected from the first interference information or the second interference information according to a preset rule, that is, the first interference information or the second interference information.

For example, assuming that the first interference information is a1 and the second interference information is a2, the interference information reported by the first terminal to the first network device may be represented as g(al, a2), where a function g() represents performing an operation on a1 and a2, for example, g(al, a2) may be a sum of a1 and a2, that is, g(al, a2)=a1+a2.

For another example, if interference corresponding to the first interference information obtained through measurement is X, interference corresponding to the second interference information is Y, and a useful signal of the first network device and the first terminal obtained through measurement is Z, the reported interference information may be Z/(X+Y), indicating a signal-to-noise ratio obtained through calculation based on the first interference information and the second interference information.

For another example, the preset rule may be that when there are a plurality of interference patterns, the first terminal may report only interference information corresponding to an interference pattern with strongest interference. In other words, if an interference strength indicated in the first interference information is greater than or equal to an interference strength indicated in the second interference information, the first terminal may report only the first interference information. On the contrary, if an interference strength indicated in the first interference information is less than an interference strength indicated in the second interference information, the first terminal may report only the second interference information. Optionally, the interference strength may be measured by using an interference-to-noise ratio, and a larger interference-to-noise ratio indicates a greater interference strength.

It should be noted that the interference tracking methods in the two interference patterns described above may be extended to a scenario in which there are more interference patterns. Details are not described in this application. In addition, if interference caused by the second network device to the first terminal is in a plurality of interference patterns, an interference pattern measured by the first terminal may be a part or all of the plurality of interference patterns. Specific interference patterns in which interference is to be measured may be directly or indirectly indicated by the second network device in the second information, for example, indicating an interference measurement resource that needs to be measured, an index of a reporting configuration corresponding to an interference pattern, or an index of an interference measurement resource set. Optionally, a mapping relationship between an interference pattern, an interference measurement resource, a reporting configuration, and an interference measurement resource set may also be indicated in the second information.

In this embodiment of this application, if interference caused by the second network device to the first terminal is uncertain, for example, interference may be a combination of several interference patterns or one of several interference patterns, the second network device may directly or indirectly indicate, in the second information, the first terminal to measure interference in a plurality of interference patterns. For example, the second information indicates interference measurement resources corresponding to the plurality of interference patterns, so that the first terminal can accurately track an interference change.

Optionally, when reporting the interference information obtained through measurement to the first network device, the first terminal may further report an interference source. For example, the first terminal may include, in a first measurement report, interference information (for example, the first interference information and/or the second interference information) that needs to be reported, and send the first measurement report to the first network device. Further, in a possible implementation, the first measurement report may further include first indication information. The first indication information indicates the second network device. In this implementation, it may be considered that an interference source is explicitly reported, indicating that the interference source is the second network device. The first indication information may be understood as an interference source indication. Alternatively, in another possible implementation, the first measurement report may be sent at a first moment, and the first moment is an interference reporting moment associated with the second network device. In this implementation, interference reporting moments associated with different interference sources are different. Therefore, it may be considered that an interference source is implicitly reported.

It should be noted that the interference information that needs to be reported may include the first interference information and the second interference information, or include a combination of the first interference information and the second interference information. The combination of the first interference information and the second interference information may be the first interference information and/or the second interference information, or may be a result obtained after an operation is performed on the first interference information and the second interference information. This is not limited in this application. For example, when the first terminal needs to measure only interference in the first interference pattern, the interference information that needs to be reported may include only the first interference information. When the first terminal needs to measure interference in the first interference pattern and interference in the second interference pattern, the interference information that needs to be reported may include the first interference information and the second interference information, or include a combination of the first interference information and the second interference information, or include one of the first interference information and the second interference information.

It should be further noted that the first terminal reports the interference source, and the first terminal is required to be capable of identifying the interference source, in other words, the first terminal is required to be capable of distinguishing between different interference sources. In other words, if the first terminal needs to report the interference source, before reporting the interference source, the first terminal needs to know, in a manner, that the second information is from the second network device, or know that interference caused by the second network device to the first terminal is measured. A manner in which the first terminal identifies the interference source is described in detail below in this application.

It can be learned from the foregoing that according to the foregoing technical solution, after receiving the interference information reported by the first terminal, the first network device can determine a specific interference source from which interference is, so that when data transmission for the first terminal is scheduled, interference caused by the interference source to the first terminal can be accurately avoided, thereby improving data transmission reliability.

As described above, the second network device is an interference source of the first terminal. In this embodiment of this application, in some scenarios, the first terminal may alternatively have a plurality of interference sources. If there are a plurality of interference sources, the first network device may configure a same time-frequency resource for different interference sources, or may configure different time-frequency resources. The time-frequency resource is a time-frequency resource for sending the indication information indicating the first terminal to measure interference, for example, the first time-frequency resource described above.

An example in which there are two interference sources is used. It is assumed that the two interference sources are respectively the second network device and a third network device. That the first network device configures a same time-frequency resource for different interference sources means that after the first network device configures the first time-frequency resource for the first terminal, the second network device may send, on the first time-frequency resource, indication information (for example, the foregoing second information) indicating the first terminal to measure interference, and the third network device may also send, on the first time-frequency resource, indication information (for example, fourth information) indicating the first terminal to measure interference.

In this way, after receiving the second information, the first terminal may measure, on the second time-frequency resource based on the second information, interference caused by the second network device, and report the first interference information obtained through measurement to the first network device. Similarly, after receiving the fourth information, the first terminal may measure, on a fourth time-frequency resource based on the fourth information, interference caused by the third network device, and report third interference information obtained through measurement to the first network device. Optionally, the second time-frequency resource and the fourth time-frequency resource may be the same or may be different. This is not limited.

Optionally, the second information may indicate that interference from the second network device changes, and the fourth information may indicate that interference from the third network device changes. In other words, if interference caused by the second network device to the first terminal changes, the second network device may send the second information on the first time-frequency resource. If interference caused by the third network device to the first terminal changes, the third network device may also send the fourth information on the first time-frequency resource. If the first terminal receives neither the second information nor the fourth information on the first time-frequency resource, the first terminal may consider that interference caused by the second network device to the first terminal and interference caused by the third network device to the first terminal do not change. In this case, an action performed by the first terminal may be pre-specified by the first network device.

Optionally, the second information may indicate the second time-frequency resource for interference measurement, and the fourth information may indicate the fourth time-frequency resource for interference measurement. For a manner in which the second information indicates the second time-frequency resource, refer to the foregoing descriptions. For a manner in which the fourth information indicates the fourth time-frequency resource, refer to the manner in which the second information indicates the second time-frequency resource. Details are not described again.

Optionally, the second information may indicate the first time range, and the fourth information may indicate a second time range. The first time range indicates that the second network device indicates the first terminal not to detect, in the first time range, the indication information that is sent by the second network device and that indicates the first terminal to measure interference, or not to measure, in the first time range, interference from the second network device, or not to report, in the first time range, interference from the second network device. Optionally, the first time range is a time range in which interference caused by the second network device to the first terminal remains unchanged after this change. Optionally, in the first time range, the second network device does not interfere with the first terminal. Similarly, the second time range indicates that the third network device indicates the first terminal not to detect, in the second time range, the indication information that is sent by the third network device and that indicates the first terminal to measure interference, or not to measure, in the second time range, interference from the third network device, or not to report, in the second time range, interference from the third network device. Optionally, the second time range is a time range in which interference caused by the third network device to the first terminal remains unchanged after this change. Optionally, in the second time range, the third network device does not interfere with the first terminal.

For a manner in which the second information indicates the first time range, refer to the foregoing descriptions. Details are not described again. For a manner in which the fourth information indicates the second time range, refer to the foregoing related descriptions in which the second information indicates the first time range. Details are not described again.

It should be noted that the first time range and the second time range respectively correspond to two interference sources, and one or more of start time, duration, or end time of the first time range and start time, duration, or end time of the second time range may be the same or different. This is not limited. In other words, the first time range and the second time range may completely overlap, partially overlap, or completely do not overlap. This is not limited. It may be understood that, because the second network device and the third network device share the first time-frequency resource, if the first time range overlaps the second time range, it indicates that the first terminal may skip detecting, on the first time-frequency resource in a time range in which the first time range overlaps the second time range, the indication information that is sent by the second network device and that indicates the first terminal to measure interference and the indication information that is sent by the third network device and that indicates the first terminal to measure interference.

It should be noted that the foregoing interference measurement and reporting process is described by using an example in which the second network device and the third network device each have an interference pattern. It should be understood that a quantity of interference patterns of the second network device and a quantity of interference patterns of the third network device are not limited in this application. Therefore, the first interference information in the foregoing process may be considered as representing information, reported by the first terminal, about interference from the second network device, and the third interference information may be considered as representing information, reported by the first terminal, about interference from the third network device.

If the second network device has a plurality of interference patterns, or interference from the second network device in a future time period is uncertain, for example, may be a combination of several interference patterns or one of several interference patterns, the second network device may directly or indirectly indicate, in the second information, interference measurement resources corresponding to the plurality of interference patterns, so that the first terminal separately measures interference in the plurality of interference patterns. For a specific implementation, refer to the foregoing descriptions.

Similarly, if the third network device has a plurality of interference patterns, or interference from the third network device in a future time period is uncertain, for example, may be a combination of several interference patterns or one of several interference patterns, the third network device may directly or indirectly indicate, in the fourth information, interference measurement resources corresponding to the plurality of interference patterns, so that the first terminal separately measures interference in the plurality of interference patterns. It may be understood that different interference patterns of the third network device may correspond to different interference measurement resources or reporting configurations. In addition, when reporting interference information obtained through measurement, the first terminal may report interference information, obtained through measurement, corresponding to each interference pattern, or may report a combination of interference information corresponding to a plurality of interference patterns.

On this basis, if the first network device configures a same time-frequency resource for different interference sources, the first terminal may distinguish between the different interference sources, or may not distinguish between the interference sources. That the first terminal distinguishes between the interference sources means that because both the second network device and the third network device use the first time-frequency resource to send the indication information indicating the first terminal to measure interference, the first terminal may identify, in a manner, the second information sent by the second network device and the fourth information sent by the third network device.

Specifically, in a possible implementation, on a same time-frequency resource, different interference sources may send information by using different precoding matrices, to distinguish between information about different interference sources in a spatial dimension. In other words, the second network device may send the second information by using a precoding matrix corresponding to the second network device, and the third network device may send the fourth information by using a precoding matrix corresponding to the third network device. In this way, the first terminal can identify, based on a PMI in the received indication information, the second information sent by the second network device and the fourth information sent by the third network device because precoding matrices indicated by PMIs in different indication information are different.

In another possible implementation, on a same time-frequency resource, different interference sources may use different spreading sequences to send information, so that orthogonality of the spreading sequences is used to distinguish between information sent by different interference sources. In other words, the second network device may send the second information by using a spreading sequence corresponding to the second network device, and the third network device may send the fourth information by using a spreading sequence corresponding to the third network device. In this way, the first terminal may identify, based on a spreading sequence used for the received indication information, the second information sent by the second network device and the fourth information sent by the third network device.

In still another possible implementation, on a same time-frequency resource, signal transmit powers used by different interference sources may be different, so that information sent by different interference sources can be distinguished between based on values of powers of received signals. In other words, the second network device may send the second information by using a signal transmit power corresponding to the second network device, and the third network device may send the fourth information by using a signal transmit power corresponding to the third network device. In this way, the first terminal may identify, based on a power of the received indication information, the second information sent by the second network device and the fourth information.

It can be learned that, if the indication information that is received by the first terminal and that indicates the first terminal to perform interference measurement uses the precoding matrix, the spreading sequence, or the signal transmit power corresponding to the second network device, it indicates that the indication information is the second information and a corresponding interference source is the second network device. In this way, the first terminal may determine that the second network device indicates the first terminal to measure interference, or further determine that interference caused by the second network device to the first terminal changes.

Similarly, if indication information that is received by the first terminal and that indicates the first terminal to perform interference measurement uses the precoding matrix, the spreading sequence, or the signal transmit power corresponding to the third network device, it indicates that the indication information is fourth information and a corresponding interference source is the third network device. In this way, the first terminal may determine that the third network device indicates the first terminal to measure interference, or further determine that interference caused by the third network device to the first terminal changes.

Optionally, the first network device may preconfigure, for the first terminal, a mapping relationship between each interference source and a PMI, a spreading sequence, or a signal transmit power corresponding to the interference source, so that the first terminal identifies the interference source.

It may be understood that, in this embodiment of this application, the first terminal may alternatively distinguish between different interference sources in another manner. This is not limited. For example, the interference source may also include an identifier of the interference source in indication information that is sent by the interference source and that indicates the first terminal to measure interference, and the first terminal identifies the interference source based on the identifier of the interference source included in the received indication information.

That the first terminal does not distinguish between interference sources means that both the second network device and the third network device use the first time-frequency resource to send the indication information indicating the first terminal to measure interference, but the first terminal does not distinguish or does not need to distinguish whether the received indication information indicating the first terminal to measure interference is from the second network device or the third network device. In other words, if the first terminal receives the indication information indicating the first terminal to measure interference, the first terminal performs interference measurement and reporting based on an indication of the indication information.

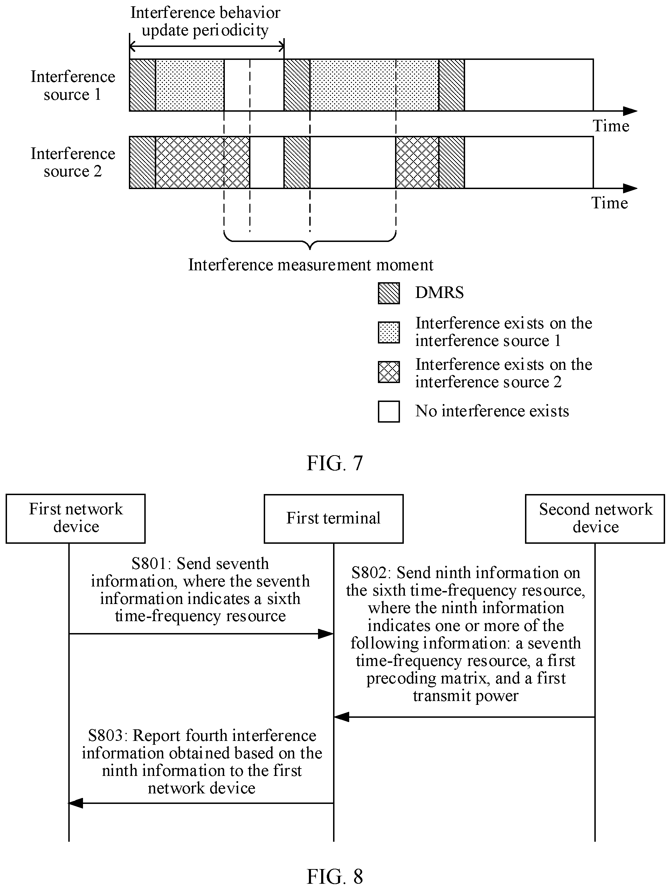

As shown in FIG. 7, in a scenario in which there are two interference sources, once interference of an interference source 1 or an interference source 2 changes, the first terminal needs to measure and report interference once, and does not distinguish between interference sources. In two complete interference behavior update periodicities shown in FIG. 7, the first terminal performs interference measurement and reporting at a plurality of moments shown by dashed lines.

That the first network device configures different time-frequency resources for different interference sources means that the first network device may configure the first time-frequency resource for the first terminal for the second network device, and configure a fifth time-frequency resource for the first terminal for the third network device. In this way, the second network device may send, on the first time-frequency resource, the indication information (such as the second information) indicating the first terminal to measure interference, and the third network device may send, on the fifth time-frequency resource, the indication information (such as the fourth information) indicating the first terminal to measure interference.

Correspondingly, the first terminal may distinguish between interference sources based on a time-frequency resource on which the indication information is received. To be specific, if the first terminal receives, on the first time-frequency resource, indication information indicating the first terminal to measure interference, it indicates that the indication information is the second information and the interference source is the second network device; if the first terminal receives, on the fifth time-frequency resource, indication information indicating the first terminal to measure interference, it indicates that the indication information is the fourth information and the interference source is the third network device.

Further, after receiving the second information, the first terminal may measure interference on the second time-frequency resource based on the second information, and report the first interference information obtained through measurement to the first network device. Similarly, after receiving the fourth information, the first terminal may also measure interference on the fourth time-frequency resource based on the fourth information, and report the obtained third interference information to the first network device. For specific implementations of the second information and the fourth information and a specific process in which the first terminal measures and reports interference, refer to the foregoing descriptions. Details are not described herein again.

Optionally, the second information may indicate that interference from the second network device changes, and the fourth information may indicate that interference from the third network device changes. In other words, if interference caused by the second network device to the first terminal changes, the second network device may send the second information on the first time-frequency resource. If interference caused by the third network device to the first terminal changes, the third network device may also send the fourth information on the fifth time-frequency resource. If the first terminal does not receive the second information on the first time-frequency resource and does not receive the fourth information on the fifth time-frequency resource, the first terminal may consider that interference caused by the second network device to the first terminal and interference caused by the third network device to the first terminal do not change. In this case, an action performed by the first terminal may be pre-specified by the first network device.

Optionally, the second information may indicate the second time-frequency resource for interference measurement, and the fourth information may indicate the fourth time-frequency resource for interference measurement. Details are not described again. The second time-frequency resource and the fourth time-frequency resource may be the same or may be different. This is not limited.

Optionally, the second information may indicate the first time range, and the fourth information may indicate the second time range. Details are not described again.

It should be noted that the foregoing process is described merely by using an example in which the second network device and the third network device each have one interference pattern. A quantity of interference patterns of the first network device and a quantity of interference patterns of the third network device are not limited in this application. Therefore, the first interference information in the foregoing process represents information, reported by the first terminal, about interference from the second network device, and the third interference information represents information, reported by the first terminal, about interference from the third network device. When the second network device or the third network device has a plurality of interference patterns, or interference in a plurality of interference patterns of the second network device or the third network device needs to be measured, extension may be performed according to the method described above.

For a manner in which the first network device configures the first time-frequency resource, refer to the foregoing descriptions. Details are not described again. For a manner in which the first network device configures the fifth time-frequency resource, refer to the foregoing related descriptions in which the first network device configures the first time-frequency resource. For example, after determining the fifth time-frequency resource, the first network device may send fifth information to the first terminal, and send sixth information to the third network device. The fifth information indicates the fifth time-frequency resource to the first terminal, and the sixth information indicates the fifth time-frequency resource to the third network device. Details are not described again.

It should be noted that the first time-frequency resource and the fifth time-frequency resource are respectively configured by the first network device for the second network device and the third network device. If both the first time-frequency resource and the fifth time-frequency resource are periodic time-frequency resources configured by the first network device, a periodicity of the first time-frequency resource and a periodicity of the fifth time-frequency resource are also independently configured, and may be the same or different. This is not limited.

In addition, although the first network device configures different time-frequency resources for different interference sources, the different interference sources may still send information by using different precoding matrices, spreading sequences, or signal transmit powers, or the different interference sources may include identifiers of the different interference sources in indication information that is sent by the different interference sources and that indicates the first terminal to measure interference. This is not limited in this application.

In this embodiment of this application, when there are a plurality of interference sources, and the first terminal distinguishes between different interference sources, in other words, the first terminal is capable of identifying an identifier of an interference source, the second information may indicate that interference caused by the second network device to the first terminal changes, and the fourth information may indicate that interference caused by the third network device to the first terminal changes. If the first terminal does not distinguish between interference sources or the first terminal is incapable of identifying an interference source, after receiving the second information or the fourth information, the first terminal can only determine that interference caused by an interference source changes, but cannot determine a specific interference source whose interference changes.

Further, in a scenario in which there are a plurality of interference sources, interference information corresponding to different interference sources may be separately reported, or may be reported in combination. The separate reporting refers to reporting interference information respectively corresponding to a plurality of interference sources, and the combined reporting may refer to reporting an operation result obtained after an operation is performed on interference information corresponding to different interference sources, for example, may be a sum of interference information corresponding to different interference sources, or interference information corresponding to one or more interference sources, for example, interference information with strongest interference or interference greater than a set threshold is selected for reporting.

Optionally, if interference information corresponding to different interference sources is separately reported, the first terminal may further report the interference source when reporting the interference information. For example, in a possible implementation, the first terminal may include a corresponding interference source indication when reporting the interference information. For example, the first terminal may report the interference information corresponding to the second network device and an interference source indication (that is, the first indication information) indicating the second network device, and the interference information corresponding to the third network device and an interference source indication indicating the third network device. The interference source indication indicating the third network device may be referred to as second indication information. It should be noted that the interference information corresponding to the second network device and the interference information corresponding to the third network device may be sent in a same measurement report, or may be sent in different measurement reports. This is not limited. In this way, the first network device may identify the interference source based on the interference source indication corresponding to the interference information.

Alternatively, in another possible implementation, interference reporting moments associated with different interference sources may be different. For example, the first terminal includes the interference information corresponding to the second network device in one measurement report, and sends the measurement report at a first moment, where the first moment is an interference reporting moment associated with the second network device; and includes the interference information corresponding to the third network device in another measurement report, and sends the another measurement report at a second moment, where the second moment is an interference reporting moment associated with the third network device, and the first moment is different from the second moment. In this way, the first network device may identify the interference source based on the reporting moment of the interference information.

When there are more interference sources, refer to the foregoing method for the two interference sources.

### Embodiment 2

FIG. 8 is a schematic flowchart of another interference tracking method according to an embodiment of this application. The method includes the following steps.

Step S801: A first network device sends seventh information to a first terminal, where the seventh information indicates a sixth time-frequency resource.

Correspondingly, the first terminal receives the seventh information from the first network device.

For descriptions of the first terminal, the first network device, a second network device, and a third network device, refer to related descriptions in Embodiment 1. No repeated description is provided.

In this embodiment, the first network device may configure a sixth time-frequency resource for the first terminal. The sixth time-frequency resource is used by the first terminal to receive information related to an interference pattern from the second network device. The information related to the interference pattern may be information indicating an interference pattern of the second network device, for example, ninth information in the following.

The sixth time-frequency resource may be a periodic time-frequency resource, or may be an aperiodic time-frequency resource. This is not limited in this application. For a manner in which the first network device configures the sixth time-frequency resource, refer to the foregoing related descriptions of the manner in which the first network device configures the first time-frequency resource. Details are not described again.

Optionally, in this embodiment, after determining the sixth time-frequency resource, the first network device may further notify the second network device of the sixth time-frequency resource. In this way, after the interference pattern changes, the second network device may send, to the first terminal on the sixth time-frequency resource, information indicating a new interference pattern, so that the first terminal determines interference caused by the new interference pattern. For example, the first network device may send eighth information to the second network device, where the eighth information indicates the sixth time-frequency resource. Correspondingly, the second network device may receive the eighth information from the first network device.

Step S802: The second network device sends ninth information on the sixth time-frequency resource, where the ninth information indicates one or more of the following information: a seventh time-frequency resource, a first precoding matrix, and a first transmit power.

Correspondingly, the first terminal may receive the ninth information from the second network device on the sixth time-frequency resource.

In this embodiment, the ninth information is information indicating the interference pattern of the second network device. Specifically, indicating the interference pattern of the second network device may be indicating one or more of the information: the seventh time-frequency resource, the first precoding matrix, and the first transmit power.

The seventh time-frequency resource is a time-frequency resource scheduled by the second network device for a second terminal that accesses the second network device, that is, a time-frequency resource for communication between the second network device and the second terminal that accesses the second network device. Optionally, the seventh time-frequency resource may also be understood as a time-frequency resource that interferes with the first terminal in a time-frequency resource scheduled by the second network device.

The first precoding matrix is a precoding matrix used for data transmission between the second network device and the second terminal. The first precoding matrix may also be understood as a precoding matrix used for data transmission scheduled by the second network device for the second terminal, or a precoding matrix used for receiving and sending a signal between the second network device and the second terminal. It may be understood that receiving and sending a signal between the second network device and the second terminal include that the second network device sends a signal to the second terminal and/or the second network device receives a signal from the second terminal. The first precoding matrix may be indicated by using a first PMI.

The first transmit power is a transmit power used by the second network device to send a signal to the second terminal. The first transmit power may also be understood as a transmit power used by the second terminal to send a signal, as indicated by the second network device, or a transmit power used for receiving and sending a signal between the second network device and the second terminal. The ninth information may indicate the first transmit power by using a real transmit value, for example, 30 dBm, or by using a relative value such as a ratio to noise, for example, 30 dB.

It should be noted that the second terminal accesses the second network device, and correspondingly, the second network device is a serving network device of the second terminal. The second terminal may communicate with the second network device. For example, the second terminal may receive control information and data information from the second network device, or the second terminal may further send data information to the second network device. It should be noted that, in this embodiment, the second terminal may be a specific terminal that accesses the second network device, or may be a general term for one or more terminals that access the second network device.

Step S803: The first terminal reports fourth interference information obtained based on the ninth information to the first network device.

In this embodiment, after receiving the ninth information, the first terminal may determine the fourth interference information based on channel information and information about an interference pattern such as the seventh time-frequency resource, the first precoding matrix, and the first transmit power that are indicated in the ninth information. The channel information is information about a channel between the first terminal and the second network device. Because the second network device is an interference source, the channel between the first terminal and the second network device may also be referred to as an interference channel. Optionally, the channel information may alternatively be information about a channel between the first terminal and the second terminal. It should be noted that a manner in which the first terminal obtains the channel information is not specifically limited in this embodiment. For example, the first network device may not send any information on a preconfigured time-frequency resource, and the second network device or the second terminal may send a reference signal on the configured time-frequency resource. In this way, the first terminal completes channel measurement based on the reference signal from the second network device or the reference signal from the second terminal that is received on the configured time-frequency resource, to obtain the channel information.

Optionally, the ninth information may indicate that the interference pattern of the second network device changes. In other words, the second network device may send the information about the new interference pattern to the first terminal when the interference pattern causing interference to the first terminal changes, for example, when any one or more of a scheduled time-frequency resource, a used precoding matrix, or a used signal transmit power change, to indicate the first terminal to re-measure interference.

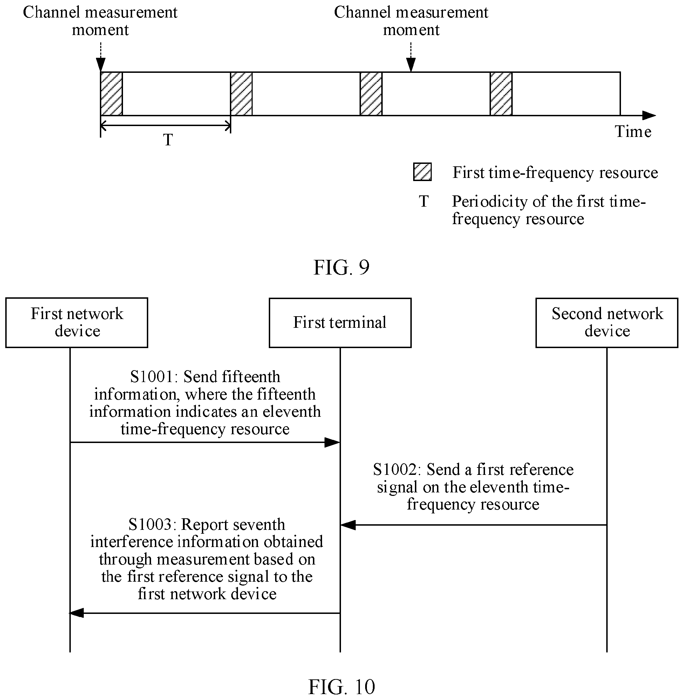

It can be learned that in this embodiment, in a scenario in which a channel changes slowly, as shown in FIG. 9, the first terminal may measure the channel once at a long interval, for example, measure the channel at a position indicated by a dashed arrow. The second network device only needs to notify the first terminal when the information about the interference pattern such as the scheduled time-frequency resource, the used precoding matrix, or the used signal transmit power changes, and the first terminal does not need to frequently measure interference. Therefore, detection power consumption of the first terminal can be effectively reduced, and energy of the first terminal can be saved.

Optionally, the ninth information is used by the first terminal to determine interference in a third interference pattern of the second network device. In other words, the ninth information is information indicating the third interference pattern of the second network device. Further, when reporting the fourth interference information, the first terminal may further report an identifier of the third interference pattern (for example, a pattern ID) and/or indication information of the seventh time-frequency resource. The identifier of the third interference pattern and the indication information of the seventh time-frequency resource may be understood as identification information of the third interference pattern. The first terminal reports both the fourth interference information and the identification information of the third interference pattern to the first network device, so that the first network device can identify, based on the identification information of the third interference pattern, that the fourth interference information is measured interference information corresponding to the third interference pattern of the second network device.

In this embodiment, if the second network device has a plurality of interference patterns, or interference from the second network device in a future time period is uncertain, for example, may be a combination of several interference patterns or one of several interference patterns, the second network device may send, on the sixth time-frequency resource, a plurality of pieces of information indicating the interference patterns, and the first terminal separately determines interference in the plurality of interference patterns.

For example, the second network device has two interference patterns. It is assumed that the two interference patterns are respectively a third interference pattern and a fourth interference pattern. In this case, the second network device may send ninth information and tenth information on the sixth time-frequency resource, where the ninth information corresponds to the third interference pattern of the second network device, and the tenth information corresponds to the fourth interference pattern of the second network device. In other words, the ninth information is information indicating the third interference pattern of the second network device, and the tenth information is information indicating the fourth interference pattern of the second network device. Optionally, both the ninth information and the tenth information may indicate that the interference pattern of the second network device changes. Optionally, the ninth information and the tenth information may be sent in a same message.

For content indicated by the ninth information, refer to the foregoing descriptions. The tenth information may indicate one or more of the following information: an eighth time-frequency resource, a second precoding matrix, and a second transmit power. The eighth time-frequency resource is another time-frequency resource configured by the second network device for the second terminal. The second precoding matrix is another precoding matrix used for data transmission between the second network device and the second terminal. The second precoding matrix may also be understood as another precoding matrix used for data transmission scheduled by the second network device for the second terminal, or another precoding matrix used for receiving and sending a signal between the second network device and the second terminal. The second precoding matrix may be indicated by using a second PMI.

The second transmit power is another transmit power used by the second network device to send a signal to the second terminal. The second transmit power may also be understood as a transmit power used by the second terminal to send a signal, as indicated by the second network device, or a transmit power used for receiving and sending a signal between the second network device and the second terminal. Similarly, the tenth information may indicate the second transmit power by using a real transmit value, or by using a relative value. Details are not described again.

It should be noted that the second terminal in the tenth information and the second terminal in the ninth information may be a same terminal, or may be different terminals. This is not limited.

In this way, the first terminal may respectively determine interference in the third interference pattern and interference in the fourth interference pattern based on the ninth information and the tenth information. Specifically, the first terminal may determine, based on the channel information and information about the third interference pattern indicated in the ninth information, the fourth interference information corresponding to the third interference pattern, and determine, based on the channel information and information about the fourth interference pattern indicated in the tenth information, fifth interference information corresponding to the fourth interference pattern. The channel information is the information about the channel between the first terminal and the second network device, or may be the information about the channel between the first terminal and the second terminal. Further, when reporting the interference information, the first terminal may report the fourth interference information corresponding to the third interference pattern and the fifth interference information corresponding to the fourth interference pattern, or may report a combination of the fourth interference information and the fifth interference information. The combination of the fourth interference information and the fifth interference information may be an operation result (for example, may be a sum of the fourth interference information and the fifth interference information) obtained after an operation is performed on the fourth interference information and the fifth interference information, or may be one piece of interference information selected from the fourth interference information and the fifth interference information. This is not limited.

It may be understood that if the first terminal reports the fourth interference information corresponding to the third interference pattern and the fifth interference information corresponding to the fourth interference pattern, the first terminal may further correspondingly report the identification information of the third interference pattern and identification information of the fourth interference pattern. For content included in the identification information of the fourth interference pattern, refer to the foregoing descriptions of the content included in the identification information of the third interference pattern. Details are not described again.

Optionally, when reporting the interference information to the first network device, the first terminal may further report an interference source. For example, a corresponding interference source indication may be carried in a measurement report for reporting the interference information, or the interference information is reported at an interference reporting moment associated with the second network device (that is, the interference source). For a specific implementation in which the first terminal reports the interference source, refer to the foregoing descriptions. Details are not described herein again. It should be noted that the first terminal reports the interference source, and the first terminal is required to be capable of identifying the interference source, in other words, the first terminal is required to be capable of distinguishing between different interference sources. For example, the first terminal may identify the interference source based on a precoding matrix, a spreading sequence, a signal transmit power, or a time-frequency resource used for information sent by the interference source. For a specific manner in which the first terminal identifies the interference source, refer to the foregoing descriptions. Details are not described again.

The foregoing method may also be extended to a scenario in which the second network device has more interference patterns. Details are not described in this application.

Optionally, the second network device may further send eleventh information on the sixth time-frequency resource, where the eleventh information indicates a third time range, and the third time range is a time range in which the first terminal does not need to detect information indicating an interference pattern from the second network device. It may be understood that if the sixth time-frequency resource is a periodic time-frequency resource configured by the first network device, after receiving the seventh information, the first terminal periodically detects, on the sixth time-frequency resource, the information indicating the interference pattern from the second network device. If the first terminal receives, on the sixth time-frequency resource, the eleventh information indicating the third time range, the first terminal may skip detecting or suspend detecting, in the third time range, the information indicating the interference pattern from the second network device. For a manner in which the eleventh information indicates the third time range, refer to the foregoing descriptions of the manner in which the second information indicates the first time range. Details are not described again.

The third time range may also be understood as a time period in which the interference pattern of the second network device remains unchanged after this change. However, it should be noted that in the third time range, the first terminal may report or not report interference. This is not limited in this application.

Optionally, the eleventh information and the ninth information may be sent in a same message, or the eleventh information, the ninth information, and the tenth information may be sent in a same message.

It should be noted that, in this embodiment of this application, the third time range may be unrelated to the interference pattern of the second network device, or may be related to the interference pattern of the second network device. The third time range is described above by using an example in which the configuration of the third time range is unrelated to the interference pattern of the second network device. If the third time range is related to the interference pattern of the second network device, each interference pattern of the second network device may have a corresponding third time range. The third time range indicates a time period in which the corresponding interference pattern remains unchanged, and the third time range may alternatively be indicated by using information indicating the corresponding interference pattern.

For example, the third interference pattern of the second network device may correspond to a time range 1, indicating a time period in which the third interference pattern remains unchanged, and the fourth interference pattern of the second network device may correspond to another time range 2, indicating a time period in which the fourth interference pattern remains unchanged. In this case, an indication manner is as follows: When indicating the third interference pattern, the ninth information may further indicate the time range 1, or it may be understood as that the time range 1 is information included in the third interference pattern. When indicating the fourth interference pattern, the tenth information may further indicate the time range 2, or it may be understood as that the time range 2 is information included in the fourth interference pattern. In this indication manner, the eleventh information may not be sent, or the time ranges respectively corresponding to the two interference patterns are not indicated by using the eleventh information. Another indication manner is as follows: The eleventh information is separately sent, where the eleventh information indicates the time range 1 corresponding to the third interference pattern and the time range 2 corresponding to the fourth interference pattern.

In this embodiment, the first terminal may alternatively have a plurality of interference sources. If there are a plurality of interference sources, the first network device may configure a same time-frequency resource for different interference sources, or may configure different time-frequency resources. The time-frequency resource is a time-frequency resource for sending the information indicating the interference pattern, for example, the sixth time-frequency resource described above.

An example in which there are two interference sources is used. It is assumed that the two interference sources are the second network device and the third network device. That the first network device configures a same time-frequency resource for different interference sources means that after the first network device configures the sixth time-frequency resource for the first terminal, the second network device may send, on the sixth time-frequency resource, the information (for example, the ninth information) indicating the interference pattern of the second network device, and the third network device may also send, on the sixth time-frequency resource, information (for example, twelfth information) indicating a new interference pattern of the third network device. In this way, the first terminal may receive the ninth information from the second network device and the twelfth information from the third network device on the sixth time-frequency resource.

It should be noted that when the first network device configures a same time-frequency resource for different interference sources, the first terminal may identify different interference sources based on different precoding matrices, spreading sequences, or signal transmit powers used for information sent by the interference sources. For details, refer to the foregoing descriptions. Details are not described again.

That the first network device configures different time-frequency resources for different interference sources means that the first network device may configure the sixth time-frequency resource for the first terminal for the second network device, and configure a tenth time-frequency resource for the first terminal for the third network device. For example, after determining the sixth time-frequency resource, the first network device may send the seventh information to the first terminal, and send the eighth information to the second network device, where the seventh information indicates the sixth time-frequency resource to the first terminal, and the eighth information indicates the sixth time-frequency resource to the second network device. Similarly, after determining the tenth time-frequency resource, the first network device may send thirteenth information to the first terminal, and send fourteenth information to the third network device, where the thirteenth information indicates the tenth time-frequency resource to the first terminal, and the fourteenth information indicates the tenth time-frequency resource to the third network device.

Further, the second network device may send, on the sixth time-frequency resource, the information (for example, the ninth information) indicating the interference pattern of the second network device, and the third network device may send, on the tenth time-frequency resource, the information (for example, the twelfth information) indicating the interference pattern of the third network device. In this way, the first terminal may receive the ninth information from the second network device on the sixth time-frequency resource, and receive the twelfth information from the third network device on the tenth time-frequency resource.

It may be understood that a difference between a case in which the first network device configures the same time-frequency resource for the different interference sources and a case in which the first network device configures the different time-frequency resources for the different interference sources mainly lies in whether the ninth information from the second network device and the twelfth information from the third network device are received on a same time-frequency resource, or the ninth information from the second network device and the twelfth information from the third network device are received on different time-frequency resources. However, in the two scenarios, processing processes used after the first terminal receives the ninth information and the twelfth information may be consistent.

Specifically, in this embodiment, for content indicated by the ninth information, refer to the foregoing descriptions. Details are not described again. The twelfth information may indicate one or more of the following information: a ninth time-frequency resource, a third precoding matrix, and a third transmit power. The ninth time-frequency resource is a time-frequency resource scheduled by the third network device for a third terminal accessing the third network device. The third precoding matrix is a precoding matrix used for data transmission between the third network device and the third terminal. The third precoding matrix may also be understood as a precoding matrix used for data transmission scheduled by the third network device for the third terminal, or a precoding matrix used for receiving and sending a signal between the third network device and the third terminal. The third precoding matrix may be indicated by using a third PMI. The third transmit power is a transmit power used by the third network device to send a signal to the third terminal. The third transmit power may also be understood as a transmit power used by the third terminal to send a signal, as indicated by the third network device, or a transmit power used for receiving and sending a signal between the third network device and the third terminal. Similarly, the twelfth information may indicate the third transmit power by using a real transmit value, or by using a relative value. Details are not described again.

It should be noted that, similar to the second terminal, the third terminal may be a specific terminal that accesses the third network device, or may be a general term for one or more terminals that access the third network device. This is not limited.

Optionally, the ninth information may indicate that the interference pattern of the second network device changes, and the twelfth information may indicate that the interference pattern of the third network device changes. In this way, if the interference pattern of the second network device changes, the second network device may send, on the sixth time-frequency resource, the ninth information indicating the new interference pattern of the second network device. If the interference pattern of the third network device changes, the third network device may also send, on the sixth time-frequency resource or the tenth time-frequency resource, the twelfth information indicating the new interference pattern of the third network device. If the first terminal neither receives the ninth information on the sixth time-frequency resource nor receives the twelfth information on the sixth time-frequency resource or the tenth time-frequency resource, the first terminal may consider that neither the interference pattern of the second network device nor the interference pattern of the third network device changes.

Further, after receiving the ninth information, the first terminal may determine the fourth interference information based on the channel information and the information about the interference pattern indicated in the ninth information, and report the fourth interference information to the first network device. Herein, the channel information is the information about the channel between the first terminal and the second network device, or the information about the channel between the first terminal and the second terminal. Similarly, after receiving the twelfth information, the first terminal may also determine sixth interference information based on the channel information and the information about the interference pattern indicated in the twelfth information, and report the sixth interference information to the first network device. Herein, the channel information is information about a channel between the first terminal and the third network device, or information about a channel between the first terminal and the third terminal.

In a scenario in which there are two interference sources, interference information corresponding to different interference sources may be separately reported, or may be reported in combination. For details, refer to the foregoing descriptions. Details are not described again.

It should be noted that the foregoing process is described by using an example in which the second network device and the third network device each have one interference pattern. When the second network device or the third network device has a plurality of interference patterns, extension may also be performed according to the foregoing method. Certainly, the foregoing method may also be extended to a scenario in which there are more interference sources. Details are not described again.

### Embodiment 3

FIG. 10 is a schematic flowchart of still another interference tracking method according to an embodiment of this application. The method includes the following steps.

Step S1001: A first network device sends fifteenth information to a first terminal, where the fifteenth information indicates an eleventh time-frequency resource.

Correspondingly, the first terminal may receive the fifteenth information from the first network device.

For descriptions of the first terminal, the first network device, a second network device, and a third network device, refer to related descriptions in Embodiment 1 or Embodiment 2. No repeated description is provided.

In this embodiment, the first network device may configure the eleventh time-frequency resource for the first terminal. The eleventh time-frequency resource is used by the first terminal to receive a first reference signal from the second network device, and the first reference signal is used by the first terminal to perform interference/channel measurement.

The eleventh time-frequency resource may be a periodic time-frequency resource, or may be an aperiodic time-frequency resource. This is not limited in this application. It may be understood that if the eleventh time-frequency resource is a periodic time-frequency resource, the first terminal may periodically detect a reference signal from the second network device on the eleventh time-frequency resource.

For a manner of configuring the eleventh time-frequency resource by the first network device, refer to the foregoing related descriptions of the manner of configuring the first time-frequency resource by the first network device. Details are not described again.

Optionally, in this embodiment, after determining the eleventh time-frequency resource, the first network device may further notify the second network device of the eleventh time-frequency resource, so that the second network device sends the first reference signal to the first terminal on the eleventh time-frequency resource, and the first terminal performs interference/channel measurement based on the first reference signal. For example, the first network device may send sixteenth information to the second network device, where the sixteenth information indicates the eleventh time-frequency resource. Correspondingly, the second network device may receive the sixteenth information from the first network device.

Optionally, the fifteenth information may further indicate whether to precode the first reference signal.

Optionally, the fifteenth information may further indicate a sequence used for the first reference signal, that is, a sending sequence of the first reference signal.

Step S1002: The second network device sends the first reference signal on the eleventh time-frequency resource.

Correspondingly, the first terminal receives the first reference signal from the second network device on the eleventh time-frequency resource.

Step S1003: The first terminal reports seventh interference information obtained through measurement based on the first reference signal to the first network device.

Correspondingly, the first network device may receive the seventh interference information from the first terminal.

In this embodiment, the second network device may send the first reference signal to the first terminal on the eleventh time-frequency resource, and determine, based on an indication of the fifteenth information, whether to precode the first reference signal when sending the first reference signal.

In a possible implementation, the first reference signal may be an NZP-CSI-RS, and corresponds to a case in which the first terminal knows the sending sequence of the first reference signal.

Specifically, if the second network device performs precoding when sending the first reference signal, a channel transmission matrix obtained by the first terminal through measurement based on the first reference signal received on the eleventh time-frequency resource is the seventh interference information, indicating interference caused by the second network device to the first terminal. Further, the first terminal may report the seventh interference information to the first network device. On the contrary, if the second network device does not perform precoding when sending the first reference signal, a channel transmission matrix obtained by the first terminal through measurement based on the first reference signal received on the eleventh time-frequency resource is channel information, indicating a channel matrix between the second network device and the first terminal. Further, the first terminal may also report the channel information obtained through measurement to the first network device.

It should be noted that in a scenario in which the first terminal reports the channel information to the first network device, the first network device may obtain information about one or more interference patterns such as a time-frequency resource scheduled by the second network device, a used precoding matrix, and a used signal transmit power, and then determine, based on the channel information reported by the first terminal and obtained information about an interference pattern of the second network device, interference caused by the second network device to the first terminal. Optionally, the first network device may obtain, through a communication interface (for example, an X2 interface) between the first network device and the second network device, the information about one or more interference patterns such as the time-frequency resource scheduled by the second network device, the used precoding matrix, and the used signal transmit power.

According to the technical solution, the first terminal may report the channel information, obtained through measurement, between the first terminal and the second network device to the first network device, and the first network device determines interference caused by the second network device to the first terminal. In this way, an amount of data exchanged between the first network device and the first terminal can be effectively reduced, air interface resource overheads can be reduced, and interference to the first terminal can be accurately tracked.

In another possible implementation, the first reference signal may alternatively be considered as a ZP-CSI-RS, and corresponds to a case in which the first terminal does not know the sending sequence of the first reference signal. In other words, this embodiment may also work when the first terminal does not know the sending sequence of the first reference signal. Because the first network device does not send any signal on the eleventh time-frequency resource, it may be considered that the ZP-CSI-RS is configured on the first time-frequency resource. In this case, the first terminal measures interference, that is, the seventh interference information, based on the first reference signal received on the eleventh time-frequency resource. Further, the first terminal may report the seventh interference information to the first network device.

It should be noted that, a difference between this implementation and a conventional technology lies in that, although the ZP-CSI-RS is used to measure interference in this implementation, an NZP-CSI-RS corresponding to the eleventh time-frequency resource does not need to be bound to perform interference measurement, to effectively reduce reference signal resource overheads.

Optionally, in this embodiment, the first network device may configure the eleventh time-frequency resource based on an actual requirement (for example, a specific position of a frequency domain resource scheduled when the second network device schedules data transmission). Specifically, if the time-frequency resource scheduled by the second network device is discrete in frequency domain, the eleventh time-frequency resource may also be discrete in frequency domain. For example, the eleventh time-frequency resource may include N discretely configured PRBs in frequency domain, where N is a positive integer. Optionally, the eleventh time-frequency resource may be aligned, in frequency domain, with the time-frequency resource scheduled by the second network device. Optionally, the first time-frequency resource may be a time-frequency resource that interferes with the first terminal in the time-frequency resource scheduled by the second network device. Optionally, the discretization may specifically mean that at least two PRBs are discontinuous.

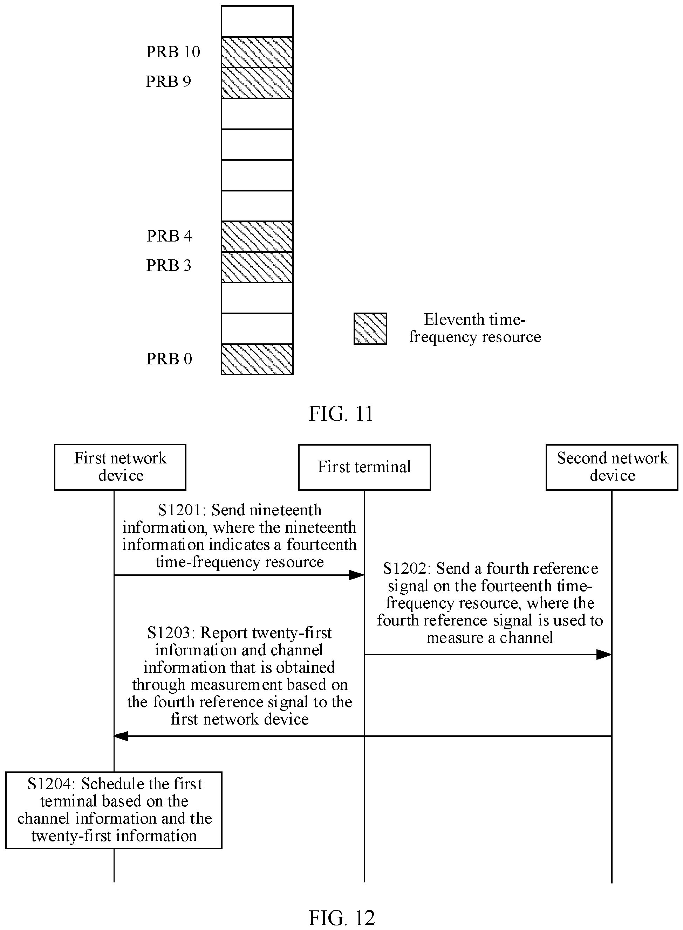

For example, as shown in FIG. 11, if the time-frequency resource scheduled by the second network device is PRBs 0, 3, 4, 9, and 10, the first network device may configure only the PRBs 0, 3, 4, 9, and 10 when configuring the eleventh time-frequency resource. It may be understood that, because the second network device does not schedule information on a PRB other than the PRBs 0, 3, 4, 9, and 10, it is unnecessary for the first network device to configure another PRB for the first terminal to receive the first reference signal from the second network device, and the another PRB may be used to transmit data of the first terminal. In other words, in this embodiment of this application, the first network device is allowed to configure an interference measurement resource discrete in frequency domain for the first terminal based on an actual requirement, to effectively reduce resource overheads. However, for the conventional technology, if interference from the RB 0 to the RB 10 is expected to be measured, reference signals need to be sent on the RB 0, the RB 1, ..., and the RB 10.

Further, if the first network device configures the first terminal to perform a narrowband feedback, a feedback granularity of the first terminal may alternatively be determined based on a granularity of a frequency domain resource scheduled when the second network device schedules data transmission. For example, if a scheduling granularity of the second network device is one PRB, the feedback granularity of the first terminal may also be one PRB. The narrowband feedback means that the first terminal separately feeds back interference for at least one subband of the eleventh time-frequency resource. Therefore, the feedback granularity may be understood as a size of a subband of the eleventh time-frequency resource, and may be represented by using a quantity of PRBs included in the subband.

Specifically, the first terminal may receive seventeenth information from the first network device or the second network device. The seventeenth information indicates a size of each subband of the eleventh time-frequency resource, and the size of the subband is related to the scheduling granularity of the second network device. In this way, the first terminal may obtain, through measurement based on the first reference signal received on each subband of the eleventh time-frequency resource, seventh interference information corresponding to the subband, and report the seventh interference information corresponding to each subband to the first network device. It may be understood that if the first terminal receives the seventeenth information from the first network device, the first network device may obtain the scheduling granularity of the second network device by interacting with the second network device.

Optionally, the scheduling granularity of the second network device is a granularity of a frequency domain resource when the second network device schedules data transmission, for example, a granularity of a scheduled frequency domain resource when the second network device schedules data to a second terminal.

It can be learned from Table 1 above that an existing feedback granularity (that is, a size of a subband) is usually determined based on a quantity of PRBs included in a BWP of the first terminal. However, according to the foregoing technical solution, because the feedback granularity of the first terminal is related to the scheduling granularity of the second network device, interference caused by the second network device can be fed back more accurately.

Optionally, the first reference signal corresponds to a fifth interference pattern of the second network device, and is used by the first terminal to determine interference in the fifth interference pattern of the second network device or channel information corresponding to the fifth interference pattern. Correspondingly, the eleventh time-frequency resource may be considered as an interference measurement resource corresponding to the fifth interference pattern of the second network device. Further, when reporting the seventh interference information, the first terminal may further report one or more of the following information: an identifier of the fifth interference pattern (for example, a pattern ID), an index of the eleventh time-frequency resource in a measurement configuration set (for example, an index of the eleventh time-frequency resource in a preconfigured measurement resource set), an index of a fifth reporting configuration (for example, an index of the fifth reporting configuration in a preconfigured reporting configuration set), and an index of a third measurement resource set. The fifth reporting configuration is a reporting configuration corresponding to the fifth interference pattern, and the third measurement resource set includes the eleventh time-frequency resource. One or more of the information may be understood as identification information of the fifth interference pattern. In this way, the first terminal reports both the seventh interference information obtained through measurement and the identification information of the fifth interference pattern to the first network device, so that the first network device can identify, based on the identification information of the fifth interference pattern, that the seventh interference information reported by the first terminal is measured interference information corresponding to the fifth interference pattern of the second network device.

Optionally, when reporting the seventh interference information obtained through measurement to the first network device, the first terminal may further report an interference source. For example, the seventh interference information may be included in a third measurement report and sent to the first network device. In an implementation, the third measurement report further includes first indication information, and the first indication information indicates the second network device, and indicates that the interference source is the second network device. In another implementation, the third measurement report is sent at a first moment, and the first moment is an interference reporting moment associated with the second network device, and implicitly indicates that the interference source is the second network device. For details, refer to the foregoing related descriptions. Details are not described again.

If interference caused by the second network device to the first terminal is in a plurality of interference patterns, for example, there are two interference patterns, assuming that the two interference patterns are respectively referred to as a fifth interference pattern and a sixth interference pattern, the second network device may send a first reference signal and a second reference signal to the first terminal, where the first reference signal corresponds to the fifth interference pattern, and the second reference signal corresponds to the sixth interference pattern.

Optionally, the fifteenth information may further indicate whether to precode the second reference signal.

Optionally, the fifteenth information may further indicate a sending sequence of the second reference signal.

Optionally, a time-frequency resource on which the first reference signal is located is different from a time-frequency resource on which the second reference signal is located. In other words, time-frequency resources for sending reference signals in different interference patterns may be different. Optionally, the fifteenth information may further indicate the time-frequency resource for sending the second reference signal.

Optionally, the sending sequence of the first reference signal is different from the sending sequence of the second reference signal. In this embodiment of this application, that sending sequences of two reference signals are different may include: Sequence types of the two reference signals are different, and/or sending signals of the two reference signals are different. For example, that the sending sequence of the first reference signal is different from the sending sequence of the second reference signal may be that the sequence of the first reference signal is an m-sequence, and the sequence of the second reference signal is a walsh sequence. For another example, that the sending sequence of the first reference signal is different from the sending sequence of the second reference signal may also mean that sequence types of the two reference signals are the same, for example, both are m-sequences, but sending signals of the two reference signals are different. For example, the sequence of the first reference signal is 01001, and the sequence of the second reference signal is 10100.

Optionally, the first terminal may alternatively have a plurality of interference sources. If there are a plurality of interference sources, the first network device may configure a same time-frequency resource for different interference sources, or may configure different time-frequency resources. The time-frequency resource is a time-frequency resource for sending a reference signal, and the reference signal is used for interference/channel measurement.

If the first network device configures a same time-frequency resource for different interference sources, the different interference sources may be distinguished between by using sequences of reference signals, that is, sequences of reference signals corresponding to the different interference sources are different. For example, sequence types of the reference signals may be different and/or sending signals of the reference signals may be different.

If the first network device configures different time-frequency resources for different interference sources, the different interference sources may be distinguished between by using time-frequency resources on which reference signals are located. Optionally, sequences of reference signals corresponding to different interference sources may be the same or different. This is not limited.

For example, there are two interference sources. It is assumed that the two interference sources are respectively the second network device and the third network device. If the first network device configures a same time-frequency resource for the second network device and the third network device, the first terminal may receive the first reference signal from the second network device and a third reference signal from the third network device on the eleventh time-frequency resource. The first reference signal and the third reference signal use different sequences. If the first network device configures different time-frequency resources for the second network device and the third network device, for example, configures the eleventh time-frequency resource for receiving the first reference signal for the second network device, and configures a twelfth time-frequency resource for receiving the third reference signal for the third network device, the first terminal may receive the first reference signal from the second network device on the eleventh time-frequency resource, and receive the third reference signal from the third network device on the twelfth time-frequency resource. In other words, the first terminal may consider that the reference signal received on the eleventh time-frequency resource is the first reference signal from the second network device, and the reference signal received on the twelfth time-frequency resource is the third reference signal from the third network device. Optionally, sequences used for the first reference signal and the third reference signal may be the same or may be different. This is not limited. Optionally, after determining the twelfth time-frequency resource, the first network device may further notify the first terminal and the third network device of the twelfth time-frequency resource. For example, the first network device may send seventeenth information to the first terminal, and send eighteenth information to the third network device, where the seventeenth information indicates the twelfth time-frequency resource to the first terminal, and the eighteenth information indicates the twelfth time-frequency resource to the third network device.

Further, the first terminal may report the seventh interference information obtained through measurement based on the second reference signal and ninth interference information obtained through measurement based on the third reference signal to the first network device. It may be understood that when reporting the interference information, the first terminal may report the seventh interference information and the ninth interference information, or may report a combination of the seventh interference information and the ninth interference information. When the seventh interference information and the ninth interference information are reported, respective interference sources of the seventh interference information and the ninth interference information may be further reported. Details are not described again.

### Embodiment 4

FIG. 12 is a schematic flowchart of yet another interference tracking method according to an embodiment of this application. The method includes the following steps.

Step S 1201: A first network device sends nineteenth information to a first terminal, where the nineteenth information indicates a fourteenth time-frequency resource, and the fourteenth time-frequency resource is used by the first terminal to send a fourth reference signal.

Correspondingly, the first terminal receives the nineteenth information from the first network device.

For descriptions of the first terminal, the first network device, and a second network device, refer to related descriptions in Embodiment 1, Embodiment 2, or Embodiment 3. No repeated description is provided.

The fourteenth time-frequency resource may be a periodic time-frequency resource, or may be an aperiodic time-frequency resource. This is not limited in this application. It may be understood that if the fourteenth time-frequency resource is a periodic time-frequency resource, the first terminal may periodically send a reference signal on the fourteenth time-frequency resource, where the reference signal is used by the second network device to measure a channel.

Optionally, the fourteenth time-frequency resource may be a discrete time-frequency resource configured by the first network device in frequency domain. For example, the fourteenth time-frequency resource may include N discretely configured PRBs in frequency domain, where N is a positive integer. Optionally, at least two of the PRBs included in the fourteenth time-frequency resource are discontinuous.

A specific meaning of discrete configuration of the fourteenth time-frequency resource is similar to discrete configuration of the eleventh time-frequency resource, as shown in FIG. 11. Details are not described again.

Optionally, for a manner of configuring the fourteenth time-frequency resource by the first network device, refer to the foregoing related descriptions of the manner of configuring the first time-frequency resource by the first network device. Details are not described again.

Optionally, after determining the fourteenth time-frequency resource, the first network device may notify the second network device of the fourteenth time-frequency resource, so that the second network device receives the fourth reference signal from the first terminal. For example, the first network device may send twentieth information to the second network device, where the twentieth information indicates the fourteenth time-frequency resource. Correspondingly, the second network device receives the twentieth information from the first network device.

Step S1202: The first terminal sends the fourth reference signal on the fourteenth time-frequency resource, where the fourth reference signal is used to measure a channel.

Correspondingly, the second network device receives the fourth reference signal from the first terminal on the fourteenth time-frequency resource.

The channel is a transmission channel between the second network device and the first terminal. Because the second network device is an interference source, the channel may also be referred to as an interference channel.

Step S 1203: The second network device sends, to the first network device, twenty-first information and channel information that is obtained by performing channel measurement based on the fourth reference signal.

Correspondingly, the first network device receives the channel information and the twenty-first information from the second network device.

The twenty-first information indicates one or more of the following information: a fifteenth time-frequency resource, a fourth precoding matrix, and a fourth transmit power. The fifteenth time-frequency resource is a time-frequency resource scheduled by the second network device for a second terminal accessing the second network device. The fourth precoding matrix is a precoding matrix used for data transmission between the second network device and the second terminal, that is, a precoding matrix used for receiving and sending a signal between the second network device and the second terminal. The fourth transmit power is a transmit power used for receiving and sending a signal between the second network device and the second terminal. The twenty-first information may be understood as information indicating an interference pattern of the second network device. The channel information may be information indicating a channel matrix between the second network device and the first terminal.

In this embodiment, the second terminal may be a specific terminal accessing the second network device, or may be a general term of one or more terminals accessing the second network device. This is not limited.

Step S1204: The first network device schedules the first terminal based on the channel information and the twenty-first information.

A main difference between this embodiment and Embodiment 3 lies in that, in this embodiment, the first terminal may send a reference signal, and the second network device (that is, the interference source) measures the reference signal sent by the first terminal, and sends, to the first network device, channel information obtained through measurement and information indicating an interference pattern, so that the first network device determines, based on the channel information and the information indicating the interference pattern that are sent by the second network device, interference caused by the second network device to the first terminal. According to this technical solution, because information used to determine interference may be exchanged through an interface between network devices, to track interference, resource overheads on an air interface can be effectively reduced.

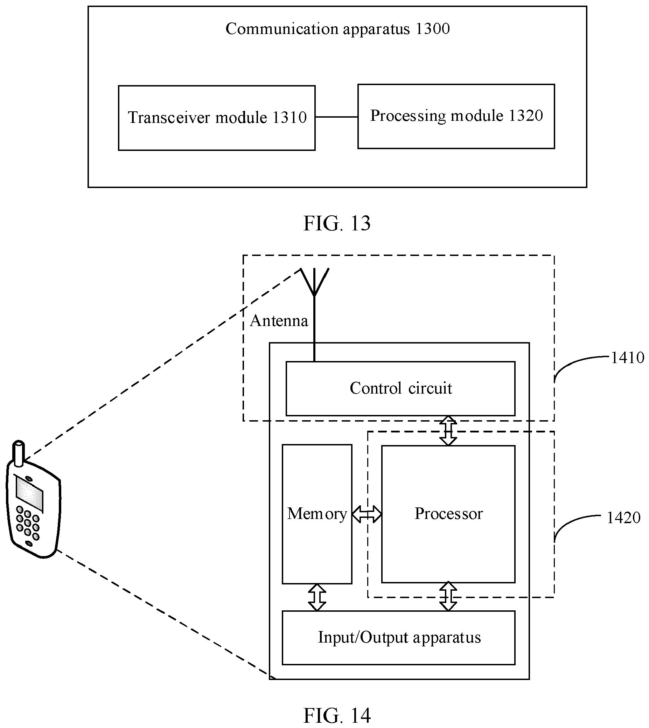

An embodiment of this application further provides a communication apparatus. FIG. 13 is a schematic diagram of a structure of a communication apparatus 1300 according to an embodiment of this application. The communication apparatus 1300 includes a transceiver module 1310 and a processing module 1320. The communication apparatus may be configured to implement a function of the terminal (for example, the first terminal) in any one of the foregoing method embodiments. For example, the communication apparatus may be a terminal, for example, a handheld terminal or a vehicle-mounted terminal. Alternatively, the communication apparatus may be a chip or a circuit included in the terminal, or an apparatus including the terminal, for example, various types of vehicles.

The communication apparatus may be configured to implement a function of a network device (for example, the second network device or the first network device) in any one of the foregoing method embodiments. For example, the communication apparatus may be a network device, or a chip or a circuit included in the network device.

For example, when the communication apparatus performs an operation or a step corresponding to the first terminal in the method embodiment shown in FIG. 4, the transceiver module 1310 is configured to receive first information from a first network device, where the first information indicates a first time-frequency resource; the transceiver module 1310 is further configured to receive second information from a second network device on the first time-frequency resource; and the processing module 1320 is configured to report, through the transceiver module 1310, first interference information obtained through measurement based on the second information to the first network device.

In a possible design, the second information indicates a second time-frequency resource for interference measurement; and the processing module 1320 is further configured to measure interference on the second time-frequency resource to obtain the first interference information.

In a possible design, the second time-frequency resource is an interference measurement resource corresponding to a first interference pattern of the second network device; and the processing module 1320 is further configured to report, through the transceiver module 1310, one or more of the following information: an identifier of the first interference pattern, an index of the second time-frequency resource, an index of a first reporting configuration, and an index of a first measurement resource set, where the first reporting configuration is a reporting configuration corresponding to the first interference pattern, and the first measurement resource set includes the second time-frequency resource.

In a possible design, the second information further indicates a first time range; and the processing module 1320 is further configured to skip detecting, in the first time range, indication information that is from the second network device and that indicates to measure interference.

In a possible design, the second information further indicates a third time-frequency resource, and the third time-frequency resource is an interference measurement resource corresponding to a second interference pattern of the second network device; and the processing module 1320 is further configured to report, through the transceiver module 1310, second interference information obtained through measurement on the third time-frequency resource to the first network device.

In a possible design, the processing module 1320 is specifically configured to send a first measurement report to the first network device through the transceiver module 1310, where the first measurement report includes the first interference information, and the first measurement report further includes first indication information, and the first indication information indicates the second network device; or the first measurement report is sent at a first moment, and the first moment is an interference reporting moment associated with the second network device.

When the communication apparatus performs an operation or a step corresponding to the second network device in the method embodiment shown in FIG. 4, the transceiver module 1310 is configured to receive third information from a first network device, where the third information indicates a first time-frequency resource; and the processing module 1320 is configured to send second information to a first terminal on the first time-frequency resource through the transceiver module 1310, where the second information is used by the first terminal to measure interference.

When the communication apparatus performs an operation or a step corresponding to the first network device in the method embodiment shown in FIG. 4, the transceiver module 1310 is configured to send first information to a first terminal, where the first information indicates a first time-frequency resource; the transceiver module 1310 is further configured to send third information to a second network device, where the third information indicates the first time-frequency resource; and the processing module 1320 is configured to receive, through the transceiver module 1310, first interference information reported by the first terminal, where the first interference information is obtained by the first terminal by measuring interference based on second information that is received from the second network device on the first time-frequency resource.

In a possible design, the first interference information is obtained by the first terminal through measurement on a second time-frequency resource, and the second time-frequency resource is an interference measurement resource corresponding to a first interference pattern of the second network device; and the processing module 1320 is further configured to receive, through the transceiver module 1310, one or more of the following information: an identifier of the first interference pattern, an index of the second time-frequency resource, an index of a first reporting configuration, and an index of a first measurement resource set, where the first reporting configuration is a reporting configuration corresponding to the first interference pattern, and the first measurement resource set includes the second time-frequency resource.

In a possible design, the processing module 1320 is further configured to receive, through the transceiver module 1310, second interference information reported by the first terminal, where the second interference information is obtained by the first terminal by measuring interference on a third time-frequency resource based on the second information, and the third time-frequency resource is an interference measurement resource corresponding to a second interference pattern of the second network device.

In a possible design, the processing module 1320 is specifically configured to receive a first measurement report from the first terminal through the transceiver module 1310, where the first measurement report includes the first interference information, the first measurement report further includes first indication information, and the first indication information indicates the second network device; or the first measurement report is sent at a first moment, and the first moment is an interference reporting moment associated with the second network device.

When the communication apparatus performs an operation or a step corresponding to the first terminal in the method embodiment shown in FIG. 8, the transceiver module 1310 is configured to receive ninth information from a second network device, where the ninth information indicates one or more of the following information: a seventh time-frequency resource, a first precoding matrix, and a first transmit power, where the seventh time-frequency resource is a time-frequency resource scheduled by the second network device for a second terminal, the first precoding matrix is a precoding matrix used for data transmission between the second network device and the second terminal, and the first transmit power is a transmit power used by the second network device to send a signal to the second terminal; and the processing module 1320 is configured to report, through the transceiver module 1310, fourth interference information obtained based on the ninth information to a first network device.

In a possible design, the transceiver module 1310 is further configured to receive seventh information from the first network device, where the seventh information indicates a sixth time-frequency resource; and the transceiver module 1310 is specifically configured to receive the ninth information on the sixth time-frequency resource.

In a possible design, the ninth information is used to determine interference from a third interference pattern of the second network device; and the processing module 1320 is further configured to report an identifier of the third interference pattern through the transceiver module 1310.

In a possible design, the transceiver module 1310 is further configured to receive tenth information from the second network device on the sixth time-frequency resource, where the tenth information indicates one or more of the following information: an eighth time-frequency resource, a second precoding matrix, and a second transmit power, the eighth time-frequency resource is another time-frequency resource scheduled by the second network device for the second terminal, the second precoding matrix is another precoding matrix used for data transmission between the second network device and the second terminal, the second transmit power is another transmit power used by the second network device to send a signal to the second terminal, and the tenth information is used to determine interference in a fourth interference pattern of the second network device; and the processing module 1320 is further configured to report, through the transceiver module 1310, fifth interference information obtained based on the tenth information to the first network device.

In a possible design, the transceiver module 1310 is further configured to receive eleventh information from the second network device on the sixth time-frequency resource, where the eleventh information indicates a third time range, the third time range is a time range in which the first terminal does not need to detect information indicating an interference pattern from the second network device, and the information indicating the interference pattern specifically indicates one or more of a time-frequency resource scheduled by the second network device, a used precoding matrix, and a used signal transmit power.

In a possible design, the processing module 1320 is specifically configured to send a second measurement report to the first network device through the transceiver module 1310, where the second measurement report includes the fourth interference information, the second measurement report further includes first indication information, and the first indication information indicates the second network device; or the second measurement report is sent at a first moment, and the first moment is an interference reporting moment associated with the second network device.

When the communication apparatus performs an operation or a step corresponding to the second network device in the method embodiment shown in FIG. 8, the transceiver module 1310 is configured to receive eighth information from a first network device, where the eighth information indicates a sixth time-frequency resource; and the processing module 1320 is configured to send ninth information on the sixth time-frequency resource through the transceiver module 1310, where the ninth information indicates one or more of the following information: a seventh time-frequency resource, a first precoding matrix, and a first transmit power, where the seventh time-frequency resource is a time-frequency resource scheduled by the second network device for a second terminal, the first precoding matrix is a precoding matrix used for data transmission between the second network device and the second terminal, and the first transmit power is a transmit power used by the second network device to send a signal to the second terminal.

In a possible design, the transceiver module 1310 is further configured to send tenth information on the sixth time-frequency resource, where the tenth information indicates one or more of the following information: an eighth time-frequency resource, a second precoding matrix, and a second transmit power, where the eighth time-frequency resource is another time-frequency resource scheduled by the second network device for the second terminal, the second precoding matrix is another precoding matrix used for receiving and sending a signal between the second network device and the second terminal, the second transmit power is another transmit power used for receiving and sending a signal between the second network device and the second terminal, and the tenth information is used to determine interference in a fourth interference pattern of the second network device.

In a possible design, the transceiver module 1310 is further configured to send eleventh information on the sixth time-frequency resource, where the eleventh information indicates a third time range, the third time range is a time range in which a first terminal does not need to detect information indicating an interference pattern from the second network device, and the information indicating the interference pattern specifically indicates one or more of a time-frequency resource scheduled by the second network device, a used precoding matrix, and a used signal transmit power.

When the communication apparatus performs an operation or a step corresponding to the first network device in the method embodiment shown in FIG. 8, the transceiver module 1310 is configured to send seventh information to a first terminal, where the seventh information indicates a sixth time-frequency resource; the transceiver module 1310 is further configured to send eighth information to a second network device, where the eighth information indicates a sixth time-frequency resource; and the processing module 1320 is configured to receive, through the transceiver module 1310, fourth interference information reported by the first terminal.

In a possible design, the fourth interference information is interference information that is from a third interference pattern of the second network device and that is determined by the first terminal; and the processing module 1320 is further configured to receive, through the transceiver module 1310, an identifier that is of the third interference pattern and that is reported by the first terminal.

In a possible design, the processing module 1320 is further configured to receive, through the transceiver module 1310, fifth interference information reported by the first terminal, where the fifth interference information is interference information that is from the fourth interference pattern of the second network device and that is determined by the first terminal.

In a possible design, the processing module 1320 is specifically configured to receive a second measurement report from the first terminal through the transceiver module 1310, where the second measurement report includes the fourth interference information, the second measurement report further includes first indication information, and the first indication information indicates the second network device; or the second measurement report is sent at a first moment, and the first moment is an interference reporting moment associated with the second network device.

In a possible design, the processing module 1320 is further configured to receive, through the transceiver module 1310, sixth interference information reported by the first terminal, where the sixth interference information is interference information from a third network device determined by the first terminal.

When the communication apparatus performs an operation or a step corresponding to the first terminal in the method embodiment shown in FIG. 10, the transceiver module 1310 is configured to receive fifteenth information from a first network device, where the fifteenth information indicates an eleventh time-frequency resource; the transceiver module 1310 is further configured to receive a first reference signal on the eleventh time-frequency resource; and the processing module 1320 is configured to report through the transceiver module 1310, seventh interference information obtained through measurement based on the first reference signal to the first network device.

In a possible design, the transceiver module 1310 is further configured to receive seventeenth information from the first network device or a second network device, where the seventeenth information indicates a size of a subband of the eleventh time-frequency resource, and the size of the subband is related to a scheduling granularity of the second network device; and the processing module 1320 is specifically configured to: obtain, through measurement based on the first reference signal received in at least one subband of the eleventh time-frequency resource, the seventh interference information corresponding to the at least one subband, and then report, through the transceiver module 1310, the seventh interference information corresponding to the at least one subband to the first network device.

In a possible design, the first reference signal corresponds to a fifth interference pattern of the second network device; the transceiver module 1310 is further configured to receive a second reference signal from the second network device, where the second reference signal corresponds to a sixth interference pattern of the second network device; and the processing module 1320 is configured to report through the transceiver module 1310, eighth interference information obtained through measurement based on the second reference signal to the first network device.

In a possible design, the processing module 1320 is specifically configured to send a third measurement report to the first network device through the transceiver module 1310, where the third measurement report includes seventh interference information, the third measurement report further includes first indication information, and the first indication information indicates the second network device; or the third measurement report is sent at a first moment, and the first moment is an interference reporting moment associated with the second network device.

In a possible design, the transceiver module 1310 is further configured to receive a third reference signal from the third network device on the eleventh time-frequency resource; and the processing module 1320 is configured to report the transceiver module 1310, ninth interference information obtained through measurement based on the third reference signal to the first network device through.

When the communication apparatus performs an operation or a step corresponding to the second network device in the method embodiment shown in FIG. 10, the transceiver module 1310 is configured to receive fifteenth information from a first network device, where the fifteenth information indicates an eleventh time-frequency resource; and the processing module 1320 is configured to send a first reference signal on the eleventh time-frequency resource through the transceiver module 1310, where the first reference signal is used by a first terminal to measure interference from the second network device.

In a possible design, the transceiver module 1310 is further configured to send seventeenth information to the first terminal, where the seventeenth information indicates a size of a subband of the eleventh time-frequency resource, and the size of the subband is related to a scheduling granularity of the second network device.

In a possible design, the first reference signal corresponds to a fifth interference pattern of the second network device; and the processing module 1320 is further configured to send a second reference signal through the transceiver module 1310, where the second reference signal corresponds to a sixth interference pattern of the second network device.

When the communication apparatus performs an operation or a step corresponding to the first network device in the method embodiment shown in FIG. 10, the transceiver module 1310 is configured to send fifteenth information to a first terminal, where the fifteenth information indicates an eleventh time-frequency resource; the transceiver module 1310 is further configured to send sixteenth information to a second network device, where the sixteenth information indicates the eleventh time-frequency resource; and the processing module 1320 is configured to receive seventh interference information from the first terminal through the transceiver module 1310, where the seventh interference information is obtained by the first terminal through measurement based on a first reference signal that is received on the eleventh time-frequency resource from the second network device.

In a possible design, the transceiver module 1310 is further configured to send seventeenth information to the first terminal, where the seventeenth information indicates a size of a subband of the eleventh time-frequency resource, and the size of the subband is related to a scheduling granularity of the second network device; and the processing module 1320 is specifically configured to receive, through the transceiver module 1310, the seventh interference information corresponding to at least one subband of the eleventh time-frequency resource from the first terminal, where the seventh interference information corresponding to the at least one subband is obtained through measurement based on the first reference signal received on the at least one subband.

In a possible design, the first reference signal corresponds to a fourth interference pattern of the second network device; and the processing module 1320 is further configured to receive eighth interference information from the first terminal through the transceiver module 1310, where the eighth interference information is obtained by the first terminal through measurement based on a received second reference signal from the second network device, and the second reference signal corresponds to a fifth interference pattern of the second network device.

In a possible design, the processing module 1320 is specifically configured to receive a third measurement report from the first terminal through the transceiver module 1310, where the third measurement report includes the seventh interference information, the third measurement report further includes first indication information, and the first indication information indicates the second network device; or the third measurement report is sent at a first moment, and the first moment is an interference reporting moment associated with the second network device.

When the communication apparatus performs an operation or a step corresponding to the first terminal in the method embodiment shown in FIG. 12, the transceiver module 1310 is configured to receive nineteenth information from a first network device, where the nineteenth information indicates a fourteenth time-frequency resource; and the processing module 1320 is configured to send a fourth reference signal on the fourteenth time-frequency resource through the transceiver module 1310, where the fourth reference signal is used to measure a channel.

When the communication apparatus performs an operation or a step corresponding to the second network device in the method embodiment shown in FIG. 12, the transceiver module 1310 is configured to receive twentieth information from a first network device, where the twentieth information indicates a fourteenth time-frequency resource; the transceiver module 1310 is further configured to receive a fourth reference signal from a first terminal on the fourteenth time-frequency resource; and the processing module 1320 is configured to send, to the first network device through the transceiver module 1310, twenty-first information and channel information that is obtained by performing channel measurement based on the fourth reference signal, where the twenty-first information indicates one or more of the following information: a fifteenth time-frequency resource, a fourth precoding matrix, and a fourth transmit power, the fifteenth time-frequency resource is a time-frequency resource scheduled by the second network device for a second terminal, the fourth precoding matrix is a coding matrix used for data transmission between the second network device and the second terminal, and the fourth transmit power is a transmit power used by the second network device to send a signal to the second terminal.

When the communication apparatus performs an operation or a step corresponding to the first network device in the method embodiment shown in FIG. 12, the transceiver module 1310 is configured to send nineteenth information to a first terminal, where the nineteenth information indicates a fourteenth time-frequency resource, and the fourteenth time-frequency resource is used by the first terminal to send a fourth reference signal; the transceiver module 1310 is further configured to send twentieth information to a second network device, where the twentieth information indicates the fourteenth time-frequency resource; the processing module 1320 is configured to receive channel information and twenty-first information from the second network device through the transceiver module 1310, where the channel information is obtained by the second network device by performing channel measurement based on the fourth reference signal, and the twenty-first information indicates one or more of the following information: a fifteenth time-frequency resource, a fourth precoding matrix, and a fourth transmit power, the fifteenth time-frequency resource is a time-frequency resource scheduled by the second network device for a second terminal, the fourth precoding matrix is a precoding matrix used for data transmission between the second network device and the second terminal, and the fourth transmit power is a transmit power used by the second network device to send a signal to the second terminal; and the processing module 1320 is further configured to: schedule the first terminal based on the channel information and the twenty-first information.

The processing module 1320 in the communication apparatus may be implemented by at least one processor or a processor-related circuit component, and the transceiver module 1310 may be implemented by at least one transceiver, a transceiver-related circuit component, or a communication interface. Operations and/or functions of the modules in the communication apparatus are used to implement corresponding procedures of the method shown in FIG. 4, FIG. 8, FIG. 10, or FIG. 12. For brevity, details are not described herein again. Optionally, the communication apparatus may further include a storage module. The storage module may be configured to store data and/or instructions. The transceiver module 1310 and/or the processing module 1320 may read the data and/or the instructions in the storage module, to enable the communication apparatus to implement a corresponding method. The storage module may be implemented, for example, by at least one memory.

The storage module, the processing module, and the transceiver module may exist separately, or all or some of the modules may be integrated. For example, the storage module and the processing module are integrated, or the processing module and the transceiver module are integrated.

FIG. 14 is another schematic diagram of a structure of a communication apparatus according to an embodiment of this application. The communication apparatus may be specifically a terminal, and the communication apparatus may be configured to implement a function of the terminal (for example, the first terminal) in any one of the foregoing method embodiments. For ease of understanding and illustration, an example in which the terminal is a mobile phone is used in FIG. 14. As shown in FIG. 14, the terminal includes a processor, and may further include a memory. Certainly, the terminal may further include a radio frequency circuit, an antenna, an input/output apparatus, and the like. The processor is mainly configured to: process a communication protocol and communication data, and control the terminal to execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, and a keyboard, is mainly configured to: receive data input by a user and output data to the user. It should be noted that some types of terminals may not have the input/output apparatus.

When data needs to be sent, the processor performs baseband processing on the to-be-sent data, and then outputs a baseband signal to the radio frequency circuit. After performing radio frequency processing on the baseband signal, the radio frequency circuit sends a radio frequency signal in a form of an electromagnetic wave through the antenna. When data is sent to the terminal, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 14 shows only one memory and one processor. In an actual terminal product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have a transceiver function may be considered as a transceiver unit of the terminal, and the processor having a processing function may be considered as a processing unit of the terminal. As shown in FIG. 14, the terminal includes a transceiver unit 1410 and a processing unit 1420. The transceiver unit may also be referred to as a transceiver, a transceiver machine, a transceiver apparatus, or the like. The processing unit may also be referred to as a processor, a processing board, a processing module, a processing apparatus, or the like. Optionally, a component for implementing a receiving function in the transceiver unit 1410 may be considered as a receiving unit, and a component for implementing a sending function in the transceiver unit 1410 may be considered as a sending unit. In other words, the transceiver unit 1410 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like. It should be understood that the transceiver unit 1410 is configured to perform a sending operation and a receiving operation on the terminal side in the foregoing method embodiments, and the processing unit 1420 is configured to perform operations other than the sending and receiving operations of the terminal in the foregoing method embodiments.

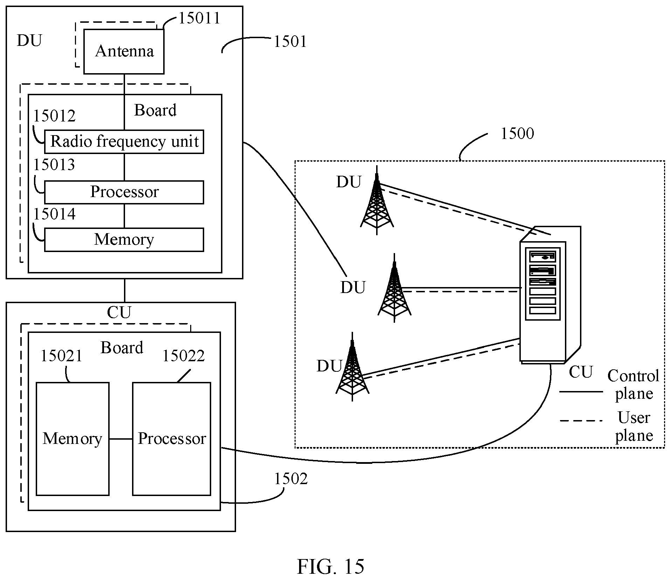

FIG. 15 is another schematic diagram of a structure of a communication apparatus according to an embodiment of this application. The communication apparatus may be specifically a network device, for example, a base station, and is configured to implement a function of the network device (for example, the first network device or the target network device) in any one of the foregoing method embodiments.

The network device 1500 includes one or more DUs 1501 and one or more CUs 1502. The DU 1501 may include at least one antenna 15011, at least one radio frequency unit 15012, at least one processor 15013, and at least one memory 15014. The DU 1501 is mainly configured to: receive and send a radio frequency signal, perform conversion between a radio frequency signal and a baseband signal, and perform partial baseband processing.

The CU 1502 may include at least one processor 15022 and at least one memory 15021. The CU 1502 is mainly configured to: perform baseband processing, control the base station, and the like. The CU 1502 is a control center of the base station, and may also be referred to as a processing unit. For example, the CU 1502 may be configured to control the base station to perform operations or steps corresponding to the first network device or the second network device in the method shown in FIG. 4, FIG. 8, FIG. 10, or FIG. 12.

The CU 1502 and the DU 1501 may communicate with each other through an interface. A control plane (control plane, CP) interface may be Fs-C, for example, F1-C, and a user plane (user plane, UP) interface may be Fs-U, for example, F1-U. The DU 1501 and the CU 1502 may be physically disposed together, or may be physically disposed separately (that is, a distributed base station). This is not limited.

Specifically, baseband processing on the CU and the DU may be divided based on a protocol layer of a wireless network. For example, functions of a PDCP layer and a protocol layer above the PDCP layer are deployed on the CU, and functions of protocol layers below the PDCP layer (such as an RLC layer and a MAC layer) are deployed on the DU. For another example, the CU implements functions of an RRC layer and the PDCP layer, and the DU implements functions of the RLC layer, the MAC layer, and a physical (physical, PHY) layer.

Optionally, the network device 1500 may include one or more radio frequency units (RUs), one or more DUs, and one or more CUs. The DU may include at least one processor 15013 and at least one memory 15014, the RU may include at least one antenna 15011 and at least one radio frequency unit 15012, and the CU may include at least one processor 15022 and at least one memory 15021.

In an embodiment, the CU 1502 may include one or more boards, and a plurality of boards may jointly support a radio access network (for example, a 5G network) of a single access standard, or may separately support radio access networks (for example, an LTE network, a 5G network, or another network) of different access standards. The memory 15021 and the processor 15022 may serve one or more boards. In other words, a memory and a processor may be disposed on each board. Alternatively, a plurality of boards may share a same memory and a same processor. In addition, a necessary circuit may further be disposed on each board. The DU 1501 may include one or more boards, and a plurality of boards may jointly support a radio access network (for example, a 5G network) of a single access standard, or may separately support radio access networks (for example, an LTE network, a 5G network, or another network) of different access standards. The memory 15017 and the processor 15016 may serve one or more boards. In other words, a memory and a processor may be disposed on each board. Alternatively, a plurality of boards may share a same memory and a same processor. In addition, a necessary circuit may further be disposed on each board.

An embodiment of this application further provides a chip system, including a processor. The processor is coupled to a memory. The memory is configured to store a program or instructions. When the program or the instructions are executed by the processor, the chip system is enabled to implement the method corresponding to the terminal or the method corresponding to the network device in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory memory, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application specific integrated circuit (application specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps in the methods disclosed with reference to embodiments of this application may be directly performed and completed by a hardware processor, or may be performed and completed by using a combination of hardware in the processor and a software module.

An embodiment of this application further provides a computer-readable storage medium. The computer storage medium stores computer-readable instructions. When a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

An embodiment of this application further provides a communication system. The communication system includes a first network device, a second network device, and a first terminal. Optionally, the communication system may further include a third network device. Optionally, the communication system may further include a core network device.

It should be understood that, the processor mentioned in embodiments of this application may be a CPU, or may be another general-purpose processor, a DSP, an ASIC, an FPGA or another programmable logic device, a discrete gate or a transistor logic device, a discrete hardware component, or the like. The general-purpose processor may be a microprocessor, or the processor may be any conventional processor or the like.

It may be further understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory, an erasable programmable read-only memory, an electrically erasable programmable read-only memory, or a flash memory. The volatile memory may be a random access memory (random access memory, RAM), used as an external cache. Through examples rather than limitative descriptions, RAMs in many forms may be used, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory.

It should be noted that when the processor is a general-purpose processor, a DSP, an ASIC, an FPGA or another programmable logic device, a discrete gate, a transistor logic device, or a discrete hardware component, the memory (storage module) is integrated into the processor.

It should be noted that the memory described in this specification is intended to include but is not limited to these memories and any memory of another appropriate type.

It should be understood that numbers in various embodiments of this application are merely used for differentiation for ease of description. Sequence numbers of the foregoing processes or steps do not mean execution orders. The execution orders of the processes or steps should be determined based on functions and internal logic of the processes or steps, and should not constitute any limitation on the implementation processes of embodiments of the present invention.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In embodiments of this application, unless otherwise specified or there is a logical conflict, terms and/or descriptions between different embodiments are consistent and may be mutually referenced, and technical features in different embodiments may be combined according to an internal logical relationship thereof, to form a new embodiment.

## Claims

1. An interference tracking method, wherein the method comprises:
receiving first information from a first network device, wherein the first information indicates a first time-frequency resource;
receiving second information from a second network device on the first time-frequency resource; and
reporting first interference information obtained through measurement based on the second information to the first network device.

2. The method according to claim 1, wherein the second information indicates a second time-frequency resource for interference measurement, and the first interference information is obtained through measurement on the second time-frequency resource.

3. The method according to claim 2, wherein the second information comprises an index of the second time-frequency resource;
the second information comprises an index of a first reporting configuration, and the first reporting configuration is associated with the second time-frequency resource; or
the second information comprises an index of a first measurement resource set, and the first measurement resource set comprises the second time-frequency resource.

4. The method according to any one of claims 1 to 3, wherein the second time-frequency resource is an interference measurement resource corresponding to a first interference pattern of the second network device; and
the reporting first interference information obtained through measurement to the first network device further comprises reporting one or more of the following information: an identifier of the first interference pattern, the index of the second time-frequency resource, the index of the first reporting configuration, and the index of the first measurement resource set, wherein the first reporting configuration is a reporting configuration corresponding to the first interference pattern, and the first measurement resource set comprises the second time-frequency resource.

5. The method according to any one of claims 1 to 4, wherein the second information indicates a first time range; and
the method further comprises:
skipping detecting, in the first time range, indication information that is from the second network device and that indicates to measure interference.

6. The method according to any one of claims 1 to 5, wherein the second information further indicates a third time-frequency resource, and the third time-frequency resource is an interference measurement resource corresponding to a second interference pattern of the second network device; and
the reporting first interference information obtained through measurement to the first network device further comprises:
reporting second interference information obtained through measurement on the third time-frequency resource to the first network device.

7. The method according to any one of claims 1 to 6, wherein the first interference information is comprised in a first measurement report and sent to the first network device; and
the first measurement report further comprises first indication information, and the first indication information indicates the second network device; or the first measurement report is sent at a first moment, and the first moment is an interference reporting moment associated with the second network device.

8. An interference tracking method, applied to a second network device, wherein the method comprises:
receiving third information from a first network device, wherein the third information indicates a first time-frequency resource; and
sending second information to a first terminal on the first time-frequency resource, wherein the second information is used by the first terminal to measure interference.

9. The method according to claim 8, wherein the second information indicates a second time-frequency resource, and the second time-frequency resource is an interference measurement resource corresponding to a first interference pattern of the second network device.

10. The method according to claim 9, wherein the second information comprises an index of the second time-frequency resource;
the second information comprises an index of a first reporting configuration, and the first reporting configuration is associated with the second time-frequency resource; or
the second information comprises an index of a first measurement resource set, and the first measurement resource set comprises the second time-frequency resource.

11. The method according to any one of claims 8 to 10, wherein the second information further indicates a first time range, and the first time range is a time range in which the first terminal does not need to detect indication information that is from the second network device and that indicates to measure interference.

12. The method according to any one of claims 8 to 11, wherein the second information further indicates a third time-frequency resource, and the third time-frequency resource is an interference measurement resource corresponding to a second interference pattern of the second network device.

13. An interference tracking method, wherein the method comprises:
sending first information to a first terminal, wherein the first information indicates a first time-frequency resource;
sending third information to a second network device, wherein the third information indicates the first time-frequency resource; and
receiving first interference information reported by the first terminal, wherein the first interference information is obtained by the first terminal by measuring interference based on second information that is received from the second network device on the first time-frequency resource.

14. The method according to claim 13, wherein the first interference information is obtained by the first terminal through measurement on a second time-frequency resource, and the second time-frequency resource is an interference measurement resource corresponding to a first interference pattern of the second network device; and
the receiving first interference information reported by the first terminal further comprises receiving one or more of the following information:
an identifier of the first interference pattern, an index of the second time-frequency resource, an index of a first reporting configuration, and an index of a first measurement resource set, wherein the first reporting configuration is a reporting configuration corresponding to the first interference pattern, and the first measurement resource set comprises the second time-frequency resource.

15. The method according to claim 13 or 14, wherein the method further comprises:
receiving second interference information reported by the first terminal, wherein the second interference information is obtained by the first terminal by measuring interference on a third time-frequency resource based on the second information, and the third time-frequency resource is an interference measurement resource corresponding to a second interference pattern of the second network device.

16. The method according to any one of claims 13 to 15, wherein the receiving first interference information reported by the first terminal comprises:
receiving a first measurement report from the first terminal, wherein the first measurement report comprises the first interference information, the first measurement report further comprises first indication information, and the first indication information indicates the second network device; or the first measurement report is sent at a first moment, and the first moment is an interference reporting moment associated with the second network device.

17. A communication apparatus, wherein the apparatus comprises at least one processor, and the at least one processor is coupled to at least one memory; and
the at least one processor is configured to execute a computer program or instructions stored in the at least one memory, so that the apparatus performs the method according to any one of claims 1 to 7, the apparatus performs the method according to any one of claims 8 to 12, or the apparatus performs the method according to any one of claims 13 to 16.

18. A computer-readable storage medium, configured to store instructions, wherein when the instructions are executed, the method according to any one of claims 1 to 7 is implemented, the method according to any one of claims 8 to 12 is implemented, or the method according to any one of claims 13 to 16 is implemented.

19. A communication apparatus, comprising a processor and an interface circuit, wherein
the interface circuit is configured to exchange code instructions or data with the processor; and
the processor is configured to perform the method according to any one of claims 1 to 7, the processor is configured to perform the method according to any one of claims 8 to 12, or the processor is configured to perform the method according to any one of claims 13 to 16.

20. A computer program, wherein when the computer program is executed, the method according to any one of claims 1 to 7 is implemented, the method according to any one of claims 8 to 12 is implemented, or the method according to any one of claims 13 to 16 is implemented.
